(19) Europäisches Patentamt
European Patent Office
Office européen des brevets

(11) EP 0 444 843 B1

(12) # EUROPEAN PATENT SPECIFICATION

(45) Date of publication and mention of the grant of the patent:
**09.10.1996 Bulletin 1996/41**

(51) Int Cl.6: **G01C 19/72**, G01D 5/26

(21) Application number: **91301479.1**

(22) Date of filing: **25.02.1991**

(54) **Interference sensors and methods of measuring a physical quantity using such interference sensors as well as vehicle control system**

Interferenzsensoren und Verfahren zur Messung einer physikalischen Grösse mit derartigen Sensoren, sowie Kfz Leitsystem.

Capteurs interférentiels et méthodes pour mesurer une grandeur physique utilisant tel capteurs aussi bien que système de contrôle d'un véhicule

(84) Designated Contracting States:
**DE FR GB**

(30) Priority: **02.03.1990 JP 49396/90**

(43) Date of publication of application:
**04.09.1991 Bulletin 1991/36**

(73) Proprietors:
- **HITACHI, LTD.**
**Chiyoda-ku, Tokyo 101 (JP)**
- **HITACHI CABLE, LTD.**
**Chiyoda-ku Tokyo 100 (JP)**

(72) Inventors:
- **Oho, Shigeru**
**Hitachi-shi, Ibaraki 316 (JP)**
- **Sonobe, Hisao**
**Katsuta-shi, Ibaraki 312 (JP)**
- **Makino, Junichi**
**Katsuta-shi, Ibaraki 312 (JP)**
- **Kajioka, Hiroshi**
**Tsuchiura-shi, Ibaraki 300 (JP)**
- **Kumagai, Tatsuya**
**Hitachi-shi, Ibaraki 319-14 (JP)**

(74) Representative: **Calderbank, Thomas Roger et al**
**MEWBURN ELLIS**
**York House**
**23 Kingsway**
**London WC2B 6HP (GB)**

(56) References cited:
**EP-A- 400 197** **GB-A- 2 216 272**
**US-A- 4 848 910**

- **Electronic Letters (19) 1983, pages 997 to 999**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to an interference sensor for measuring a physical quantity. It is particularly, but not exclusively, concerned with an interference sensor being an optical gyroscope. It also relates to a vehicle control system incorporating such an interference sensor, and to a method of measuring a physical priority.

It is well known to measure a physical quantity using a sensor in which two beams of light, or other radiation, are caused to interfere, with that interference being dependent on the physical quantity to be measured. Thus, optical gyroscopes are known in which two beams of light are caused to propagate in opposite directions through a loop of optical fibre. The two light beams will interfere when they emerge in opposite directions from the loop, and are caused to follow the same optical path. When the loop rotates, the propagation path lengths of the two light beams are changed, so that there is a change in the interference between the light beams. The rotational angular velocity can then be determined on the basis of changes in the phase difference between the interfering light beams.

There are two known systems for measuring the change in the phase of the interference. The first known system is known as the "closed loop" type, in which the loop contains additional means for varying the phase of the beams to maintain a constant phase difference therebetween. The detector, which detects the interfering beams, therefore detects a substantially constant phase difference, and the phase difference caused by rotation of the loop of the optical gyroscope is determined from the degree of adjustment needed within the loop itself.

The second system, known as the "open loop" type, directly detects changes in the phase difference between the interferring beams. The present invention is primarily concerned with this latter system.

It is also known to introduce an optical modulator into the optical system of the interference sensor, and to analyse changes in phase on the basis of that modulation. Various modulation systems are known, of which one type is phase modulation. Examples of such phase modulation is shown in US 4545682, US 4634282, US 4645345, US 4687330, US 4707136, US 4728192, US 4765739, and Electronics Letter (19) (1983) pages 997 to 999. US 4848910 discloses the use of both phase and amplitude modulation.

The present invention seeks to provide an interference sensor in which the interference signal from optically phase modulated interferring radiation beams is analysed, in a way which permits such analysis to be carried out rapidly.

In a first aspect, the present invention provides an interference sensor for measuring a physical quantity, comprising:

a source for generating optical radiation;
means for generating first and second radiation beams from said optical radiation, the phase relationship between the first and second radiation beams being dependent on said physical quantity;
an optical phase modulator for modulating said first and second radiation beams with an optical phase modulation frequency $f_m$;
means for causing said first and second radiation beams to interfere and thereby to generate an interference beam;
means for generating an electronic interference signal from said interference beam; and
an analyser for analysing said electronic interference signal to derive the optical phase difference between the first and second radiation beams, thereby to measure said physical quantity;
wherein:
said analyser has means for sampling the electronic interference signal at a sampling frequency $f_s$ to obtain a series of sampled data, and means for extracting aliasing frequency components $\Delta f$ from the series of sampled data in accordance with a relationship $\Delta f = f_m - nf_s$, where n is an integer, and means for deriving the optical phase difference from a parameter of the extracted aliasing frequency components.

The first aspect of the present invention is concerned with a sampling technique. However, the inventors of the present application have realised that the effect achieved by such sampling can also be achieved by electronically modulating the electronic interference signal from the detector which detects the interfering radiation beams, so that the analyser operated by investigating a property of a frequency component corresponding to a different relationship between the optical phase modulation frequency and the or each frequency of the electronic modulation, since it is possible to use an electronic modulation with more than one frequency component, such as a square wave, rather than a sinusoidal wave with a single frequency component. Such electronic modulation can be used in conjunction with sampling, but is an independent aspect of the present invention.

Accordingly, in this second aspect the invention provides an interference sensor for measuring a physical quantity, comprising:

a source for generating optical radiation;
means for generating first and second radiation beams from said optical radiation, the phase relationship between the first and second radiation beams being dependent on said physical quantity;

an optical phase modulator for modulating said first and second radiation beams with an optical phase modulation frequency $f_m$;
means for causing said first and second radiation beams to interfere and thereby to generate an interference beam;
means for generating an electronic interference signal from said interference beam; and
an analyser for analysing said electronic interference signal to derive the optical phase difference between the first and second radiation beams, thereby to measure said physical quantity;
wherein:
said analyser has means for electronically modulating said electronic interference signal by a periodic electronic modulation of at least one modulation frequency to obtain a modulated signal; and means for deriving a parameter of at least one beat frequency component between the frequency $f_m$ and said at least one modulation frequency, thereby to derive said optical phase difference.

The inventors of the present application realised further that such electronic modulation was equivalent to optically phase modulating the interfering radiation beams by modulation at two frequencies. Then, a property of a frequency component corresponding to a difference relationship between the frequency of at least one line of the Fourier line spectrum and the frequencies of the two modulations is investigated.

Thus, in a third independent aspect the present invention provides an interference sensor for measuring a physical quantity, comprising:

a source for generating optical radiation;
means for generating first and second radiation beams from said optical radiation, the phase relationship between the first and second radiation beams being dependent on said physical quantity;
an optical phase modulator for modulating said first and second radiation beams with an optical phase modulation of a first modulation frequency $f_{m1}$;
means for causing said first and second radiation beams to interfere and thereby to generate an interference beam;
means for generating an electronic interference signal from said interference beam; and
an analyser for analysing said electronic interference signal to derive the optical phase difference between the first and second radiation beams thereby to measure said physical quantity;
wherein:
the interference sensor further includes means for imposing a further optical phase modulation on said first and second radiation beams at a second modulation frequency $f_{m2}$; and
said analyser is arranged to analyse said interference signal in dependence on said further optical phase modulation, and means for deriving a parameter of at least one beat frequency component between said first and second modulation frequencies, thereby to derive said optical phase differences.

The present invention further provides for each of the above aspects a respective method of measuring a physical quantity .

Each aspect of the present invention may be combined with one or both of the other two aspects.

With the present invention, the physical quantity which determines the changes in the phase relationship between the interfering radiation beams can be measured rapidly. The present invention is therefore applicable to the control of a vehicle in which changes in the movement of that vehicle are detected, and the subsequent movement of the vehicle controlled on the basis of the movement already detected.

Embodiments of the present invention will now be described in detail, by way of example, with reference to the accompanying drawings in which:

Fig. 1 shows schematically the general construction of an interference sensor according to a first embodiment of the present invention;
Fig. 2 are graphs illustrating the processing which can be carried out in the first embodiment;
Fig. 3 is a detailed block diagram of an arithmetic processing circuit;
Fig. 4 shows a signal processing circuit, being part of a second embodiment of the present invention;
Fig. 5 shows a signal processing circuit, being part of a third embodiment of the present invention;
Fig. 6 shows a signal processing circuit, being part of a fourth embodiment of the present invention;
Fig. 7 is a graph showing processing which occurs in the fourth embodiment of the present invention;
Fig. 8 is a block diagram illustrating the production of reference signal frequencies;
Fig. 9 shows a signal processing circuit being part of a fifth embodiment of the present invention;
Fig. 10 shows an operating sequence which may be used in the present invention;
Fig. 11 shows a signal sampling operation which may be used in the present invention;
Fig. 12 is a diagram showing the application of the present invention to control the vehicle;

Fig. 13 is a schematic diagram of the general construction of an interference sensor, being a sixth embodiment of the present invention;

Fig. 14 is a schematic diagram of the general construction of an interference sensor, being a seventh embodiment of the present invention;

Fig. 15 is a schematic block diagram showing the general construction of an interference sensor, being an eighth embodiment of the present invention;

Fig. 16 is a waveform diagram showing the timing of signals in the eighth embodiment;

Fig. 17 illustrates the structure of the signal processing circuit used in the eighth embodiment of the present invention;

Fig. 18 is a waveform diagram showing the timing of signal in a ninth embodiment of the present invention;

Fig. 19 is a block diagram of a signal processing circuit, being part of the ninth embodiment of the present invention;

Fig. 20 is a block diagram of a signal processing circuit, being part of a tenth embodiment of the present invention;

Figs. 21 and 22 are waveform diagrams showing the timing of signals in the tenth embodiment of the present invention;

Fig. 23 is a block diagram showing a signal processing circuit, being part of an eleventh embodiment of the present invention; and

Fig. 24 is a block diagram of a signal processing circuit, being part of a twelfth embodiment of the present invention.

Before discussing embodiments of the present invention in detail, the general operation of an interference sensor, according to the present invention, will be discussed. As mentioned above, there are six different situations that need to be considered. Firstly, the present invention may operate in the frequency domain, in which case consideration is given to the frequency of the electronic interference signal of the detector. Then, when operating the frequency domain, there are three possibilities. Firstly, handling methods can be used in which the signal is sampled at a suitable sampling frequency. Preferably, this frequency is less than the frequency of the signal, and therefore such an arrangement is referred to as a "down sampling method". However, it is also possible to use sampling frequencies which are higher than the frequency of the signal being measured. Secondly, it is possible to add to the optical modulation of the beams a second optical modulation, such an arrangement will be referred to as "cross modulation". Thirdly, there is the possibility of adding an additional electronic modulation after detection of the interference beam, and such an arrangement will be referred to as "direct modulation". However, the present invention may alternatively operate in the time domain, in such cases it is again possible to use sampling methods, a method in which additional optical modulation is provided, and methods in which additional electron modulation is provided.

The time waveform or frequency spectrum of a modulated interference signal is determined by the property of a modulation input signal (the time waveform or the frequency spectrum) and the phase difference of the light beams. Where the modulation input signal is a periodic signal and where the phase difference of the light beams has a constant value, the interference signal becomes a regular periodic signal. In principle, the phase difference of the light beams, which is related to a physical quantity to be detected by the interference sensor, can be measured by subjecting the waveforem of one cycle of the interference signal to signal processing. However, when the interference signal is processed in real time, the sampling and arithmetic circuits of high speed are needed.

In the interference sensor for an optical fiber gyro etc., the phase difference of the light beams is a quantity fluctuating every moment, but it may normally be regarded as being a constant value, at least in the short term. For example, in an optical fiber gyro, the smoothing time of an output value is as long as several tens of msec. to several tens of sec. Consequently, in many applications of the optical fiber gyro, the light phase difference to be measured (herein, proportional to the angular velocity of rotation) may be considered to have a constant value for a period of time of several msec. to several tens of msec. This is evident when it is considered that the sudden changes in angular velocity are limited in a moving object such a aircraft or vehicle.

Assuming, for example, that the phase modulation signal of the optical fiber gyro is set at 20 kHz, it has a period of 50 μsec. Under the assumed condition that the light phase difference to be measured does not change for the period of time of several msec. or several tens msec., the waveform of the interference signal repeates a fixed shape over 100 or 1000 cycles. Therefore, when the interference signal waveform for such many cycles is to be handled, equivalent signal processing can be executed corresponding to a time signal whose period is extended. Accordingly, the requirements for the sampling frequency and the processing speed of the arithmetic circuit can be significantly reduced.

To obtain equivalent time (frequency domain) signal processing described above, a down sampling method can be used in which the interference signal is sampled at a frequency lower than a detection frequency. Further, when the equivalent time (frequency domain) interference signal waveform which is similar to the waveform of the interference signal in real time is composed using sampled values, the phase difference of the interference sensor is obtained from the equivalent time (frequency domain) interference signal. Alternatively, the phase difference can be obtained even when aliasing frequency components based on the sampling are extracted from the sampled values obtained by the down sampling method.

Alternatively, cross modulation methods may be used to achieve equivalent tone (frequency domain) signal processing. Cross modulation uses a first modulation signal and a second phase modulation signal, to which modulation signals are added. The optical phase modulator acting on the light beams is driven with the sum signal. Thus, the low frequency components of an interference signal frequency spectrum produced by cross modulation may be detected, and extracted, and the result processed in equivalent time (frequency domain).

The third alternative is to use a direct modulation method, which extracts the frequency components of a mixing signal obtained by electrically multiplying the interference signal and a local oscillation signal generated by means of a mixer circuit.

The above discussion has been concerned with processing in the frequency domain, in order to obtain an equivalent time processing. It is also possible to measure the characteristic of the time waveform, to operate in the time domain. The interference signal has equal information in the light phase difference which is measured relative to the phase modulation, for both the time domain and the frequency domain. Therefore, it is possible to make use of the waveform moment in the time domain, as a characteristic variable of that waveform, and operate in the time domain, rather than considering lines in a Fourier spectrum when operating in the frequency domain.

Thus, in an interference measuring method operating in the time domain, the phase difference between the interfering waves can be determined by using time information from the time waveform characteristic points of the interference wave signal and calculating the phase difference between the interfereing waves from the result of that measurement.

An interference sensor operating in the time domain may then extract the time waveform characteristic points of the interference wave signal and calculate the time intervals between the extracted waveform characteristic points or time intervals between the waveform characteristic points and specified time reference points associated with the interfering waves. From the calculated time intervals, it is possible to determine the phase difference between the interfering waves or a physical quantity represented by the phase difference.

Such an interference sensor may adjust the phase difference of interference between the interfering waves by phase-modulating the interference signal with an optical phase modulation extract the time waveform characteristic points of the interference wave signal, which was formed of two phase-modulated interfering waves combined, and calculate the time intervals between the extracted waveform characteristic points or the time intervals between the waveform characteristic points and the specified time reference points of the phase modulation drive signal. To simplify the construction of and processing by the interference sensor, the optical phase modulation preferably uses a periodically recurring signal as the drive signal in phase-modulating the interfering waves. Also for improved precision, it is desirable to compensate for the quantity of phase modulation on the basis the quantity of phase modulation resulting from the optical phase modulation detected from the measured value of the time intervals.

It is also desirable that the maximum or minimum points of the time waveform of the interference signal or the center of the time waveform be used as the waveform characteristic points. It is further desirable for the simplified processing that the waveform characteristic points be distinguished according to their time intervals with respect to the specified time reference points.

The interference measurement may involve modulating the intensity of a wave source by using a locally oscillated signal, the locally oscillated signal having a frequency difference from that of the optical phase modulation drive signal and also having a frequency spectrum such that its amplitude characteristic is flat up to a specified high-order frequency component.

Embodiments of the present invention operating in the frequency domain will now be described. It should be noted that the present invention can make use of digital circuitry, which permits integration of the signal processing circuit, and also permits the present invention to make use of integrated circuit technology.

Thus the apparatus may be made small in size by implementing the signal processing circuit in the form of an LSI and may be used as a sensor for measuring rotational motion or as an azimuth sensor. This enables a vehicular control system of high precision to be constructed.

Fig. 1 shows an example of the general arrangement of a phase modulation type optical fiber gyro according to a first embodiment of the present invention.

A light beam from a light source 10 propagates via a first fiber coupler 21 and a polarizer 30 and reaches a second fiber coupler 22, in which the beam branches into two light beams that propagate through a fiber loop 40 respectively counterclockwise and clockwise. These light beams have their light phases modulated by a phase modulator (PM) 50 in accordance with a modulation signal generated by a phase modulator driver circuit (PMPC) 60. This imposes a primary modulation. Thereafter, the two beams reach the fiber coupler 22 and are recombined causing an interference beam to be generated. The interference beam 1 passes from the fiber coupler 22 to the first fiber coupler 21 via the polarizer 30. In the first fiber coupler 21, the interference signal branches into two beams, one of which returns to the light source 10 and the other of which passes to a photoelectric converter circuit 70 employing a photodiode and is output as an interference signal therefrom. The interference signal is transmitted to a signal processing circuit 100 and is processed so as to extract the angular velocity of rotation of the optical fiber gyro.

Next, the interference signal will be explained. If the interference signal is denoted by P, it can be expressed by Eqs. (1) and (2) in accordance with the principle of interference:

$$P = K\{1 + v\cos\psi\} \quad (1)$$

$$\psi = \phi_S + \phi(t) - \phi(t-\tau) \quad (2)$$

Here, $\psi$ denotes the phase difference of the beams, K a coefficient which is proportional to the intensity of the beams and the gain of the photoelectric converter circuit, $\underline{v}$ a transmission characteristic of the interferometer, and $\phi_S$ the Sagnac phase difference which is proportional to the rotational angular velocity of rotation. In addition, r denotes the propagation delay time of the light wave which propagates through the fiber loop.

In this embodiment, a sinusoidal wave at a frequency $f_m$ is employed as the phase modulation signal. Assuming the characteristics of the phase modulator to be ideal, the interference signal P is as shown in Eq. (3):

$$P = K\{1 + v\cos(\phi s - \phi_e \sin\theta) \quad (3)$$

$$\theta = w_m (t - \tau/2) \quad (4)$$

$$\phi_e = 2\phi_m \sin(w_m \tau/2) \quad (5)$$

Here $\phi_e$ denotes the effective phase modulation index, $w_m = 2\pi f_m$ a modulation angular frequency, and $\phi_m$ a modulation amplitude.

The interference signal P in Eq. (3) is expanded into a Fourier series employing Bessel functions, and it becomes a line spectrum with lines at frequencies $f_m$, $2f_m$, $3f_m$, $4f_m$ .... For the purpose of eliminating fluctuations in the light intensity coefficient K and the effective phase modulation index $\phi_e$ and them measuring the Sagnac phase difference $\phi_S$, the amplitudes of at least three of the lines of the spectrum need to be determined. In this embodiment, the first-order, second-order and fourth-order frequency components of the phase modulation are extracted from the interference signal by the signal processing circuit 100 to which the technique of equivalent time processing is applied. The arrangement and operation of the signal processing circuit 100 in this embodiment will be described below.

The arrangement of the signal processing circuit 100 may be divided into the following four sections: a sampling circuit 111 which samples the photoelectrically-converted interference signal and converts the sampled signal into a digital signal; a timer circuit 112 which generates timing signals for the sampling time, processing time, etc; a digital signal processor 180 which executes digital processing on the results of the sampling, so as to determine the angular velocity of rotation; and a control circuit 170 which controls the sampling circuit and the arithmetic processing circuit.

The processing circuit 100 is thus relatively simple, and the signals at lower frequencies corresponding to the interference signal can be obtained by sampling the interference signal at a sampling frequency different e.g., lower, than the frequency of the interference signal. This gives the advantage that neither high-speed sampling processing nor a high-speed A/D converter is required.

The sampling circuit 111 has an input buffer 110 which receives the interference signal and adjusts the signal level thereof, a sample-and-hold circuit 120 which samples the output signal of the input buffer at a predetermined frequency, and an A/D converter 130 by which the signal from the sample-and-hold circuit is converted into a digital signal.

The timer circuit 112 includes a crystal oscillator (OSC) 140, a frequency divider 150 which is formed e.g. by a high-speed TTL and which divides the frequency of the output signal of the oscillator 140, and a programmable timer 160 which receives a clock signal produced by the frequency division of the frequency divider 150. This timer 160 supplies the sampling circuit, the digital signal processor 180 and a microcomputer (CPU) 170 with clock signals respectively corresponding thereto.

The programmable timer 160 operates with reference to the clock signal which is fed from the frequency divider 150. Thus, a pulse signal is generated at a predetermined frequency $f_s$; and is applied to the sample-and hold circuit 120 and the A/D converter 130 as a sampling timing. The sample-and-hold circuit 120 and the A/D converter 130 perform the above-described operations of sampling and holding the interference signal and A/D converting the sampling timing at the sampling frequency $f_s$.

The programmable timer 160 generates a square wave signal at the frequency $f_m$ of the primary modulation and

supplies that square wave to the phase modulator driver circuit 60. The phase modulator driver circuit 60 has a filter circuit, and a transistor buffer circuit which drives the phase modulator 50 as a capacitive load. In such a phase modulator driver circuit 60, the higher harmonic components of the square wave signal received from the programmable timer 160 are removed by filtering by a filter circuit, and a substantially sinusoidal signal at the frequency $f_m$ is set as the primary modulation signal so as to drive the phase modulator 50.

The microcomputer 170 is connected through a bus line with the programmable timer 160, A/D converter 130 and digital signal processor 180. The oscillation operation of the programmable timer 160 is controlled by the microcomputer 170. The sampling frequency $f_s$ and the phase modulation frequency $f_m$ are set by the microcomputer 170. The microcomputer 170 monitors the A/D conversion operation of the A/D converter 130, and it senses the end of the A/D conversion after receiving the sampling timing signal from the programmable timer 160. The interference signal converted into a digital code by the A/D converter 130 is read out of this A/D converter 130 as interference signal data every sampling step by the microcomputer 170. The microcomputer 170 transfers the interference signal data to the digital signal processor 180. Since the production of the interference signal data by the A/D converter 130 is synchronous with the sampling timing, the data transfer is also performed at the same frequency as the sampling frequency $f_s$.

On receiving the interference signal data from the microcomputer 170, the digital signal processor 180 extracts the component at the phase modulation frequency $f_m$, the component at the second-order harmonic $2f_m$ and the component at the fourth-order harmonic $4f_m$, which components are contained in the interference signal. In this embodiment, the equivalent time signal processing is carried out in accordance with the present invention using the techniques referred to above as "down sampling". More specifically, the aliasing signal components $\Delta f$ etc. of lower frequencies corresponding to the phase modulation frequency components are extracted by using the relationships of Eqs. (6) - (8) below which are expressed in terms of the sampling frequency $f_S$ and the phase modulation frequency $f_m$.

$$\Delta f = f_m - nf_s \quad (6)$$

$$2\Delta f = 2f_m - 2nf_s \quad (7)$$

$$4\Delta f = 4f_m - 4nf_s \quad (8)$$

In these equations, n is an integer.

The above situation is illustrated in Fig. 2 (a). The generation of the aliasing frequencies resembles the principle of a stroboscope or a sampling scope. It should be noted that $f_s$ may be greater or less than $f_m$, although only the latter case will be discussed in detail below. By digital calculations based on the interference signal data items received, the digital signal processor 180 extracts the value of $\Delta f$, $2\Delta f$ and $4\Delta f$ frequency components in place of the frequencies $f_m$, $2f_m$ and $4f_m$. The filter calculations in this embodiment will be described below.

Fig. 3 is a block diagram of the digital arithmetic processing which is executed in the digital signal processor 180. Individual functional blocks are preferably achieved by suitable software, but dedicated circuits may be used.

The interference signal data items from the microcomputer 170 are input to band-pass filters 201, 202 and 204 of center frequencies $\Delta f$, $2\Delta f$ and $4\Delta f$ previously set by the microcomputer and are extracted as the first-order, second-order and fourth-order component signals, respectively. Amplifiers 211, 212 and 214 amplify the respective signals to suitable magnitudes. At this stage, the respective signals contain, not only the principle components of the corresponding frequencies $\Delta f$, $2\Delta f$, and $4\Delta f$, but also noise and other frequency components which have not been completely suppressed by the band-pass filters 201, 202, and 204. Multipliers 221, 222 and 224 detect the rspective signals of the first-order, second-order and fourth-order components at high sensitivities by a lock-in operation. More specifically, the first-order component signal from the amplifier 211, for example, is multiplied by the first-order reference signal of a frequency $\Delta f$ in the multiplier 221. As a result, the output signal of the multipler 221 has a component of frequency $2\Delta f$ and D.C. components and other noise frequency components. The D.C. component is extracted from these components by a low-pass filter 231.

The above lock-in operation is similar for the second-order and fourth-order component signals. The multiplier 222 and a low-pass filter 232 constitute a lock-in detector for the second-order frequency $2\Delta f$. Therefore, the second-order reference signal of the frequency $2\Delta f$ is input to the multiplier 222. Likewise, the multiplier 224, and a low-pass filter 234 constitute a lock-in detector for the fourth-order frequency $4\Delta f$, and the fourth-order reference signal of a frequency $4\Delta f$ is used.

In this embodiment, however, it is sometimes difficult to produce suitable low-pass filters in the form of digital filters for the sampling frequency. In this embodiment, therefore, the low-pass filters 231, 232 and 234 are succeeded by

diminution sampling units 241, 242 and 244 as shown in Fig. 3. The diminution sampling units 241, 242 and 244 sample input data at a frequency $f_d$. The diminution frequency $f_d$ should normally be lower than the sampling frequency $f_s$ and higher than the frequency response to be achieved by the optical fiber gyro.

Low-pass filters 251, 252 and 254 subject the output data items of the respective diminution sampling units 241, 242 and 244 to filtering. Accordingly, the first-order D.C. signal $S_1$, second-order D.C. signal $S_2$ and fourth-order D.C. signal $S_4$ which are the outputs of the low-pass filters 251, 252 and 254 are proportional to the amplitudes of the $\Delta f$, $2\Delta f$ and $4\Delta f$ frequency components contained in the interference signal data items, respectively. The $\Delta f$, $2\Delta f$ and $4\Delta f$ frequency components in the interference signal data items are the reflexes of the phase modulation frequency $f_m$ and the higher harmonic components $2f_m$ and $4f_m$ thereof which are originally contained in the interference signal, so that the D.C. signals $S_1$, $S_2$ and $S_4$ are proportional to the amplitudes of the $f_m$ and $2f_m$ and $4f_m$ frequency components in the interference signal respectively.

The D.C. signals $S_1$, $S_2$ and $S_4$ are input to dividers 261 and 262, by which the first ratio signal $x = S_1/S_2$ and the second ratio signal $y = S_4/S_2$ are respectively output. The second ratio signal y is a variable dependent upon only the effective phase modulation index $\phi_e$ of Eq. (5), and is expressed by Eq. (9):

$$y = J_4(\phi_e)/J_2(\phi_e) \tag{9}$$

The first ratio signal x is expressed by Eq. (10) with the Sagnac phase difference $\phi_S$:

$$k\,x = \tan \phi_S \tag{10}$$

$$k = J_1(\phi_e)/J_2(\phi_e) \tag{11}$$

The constant k in Eq. (11) is determined by only the effective phase modulation index $\phi_e$. In Eqs. (9) and (11), $J_n$ (n = 1, 2, 4) denotes a Bessel function of the first kind of order n.

The effective phase modulation index $\phi_e$ fluctuates in dependence on the voltage amplitude of the drive signal produced by the phase modulator driver circuit 60, and in addition, on the characteristics of the phase modulator 50 itself. Consequently, the constant k of Eq. (11) also fluctuates. The second ratio signal y compensates for the fluctuations of the effective phase modulation index $\phi_e$. When the index $\phi_e$ is obtained from the value of the signal y in accordance with Eq. (9), the constant k can be determined by Eq. (11). The relationship between the second ratio signal y and the constant k need not be calculated on each occasion, but the corresponding values thereof can be found by tabulating them in advance. A look-up table 270 stores the relationship between the parameters y and k, and it generates the constant k in response to a y input.

An angular velocity calculator 280 receives the first ratio signal x from the first divider 261 and the constant k from the look-up table 270, and calculates the rotational angular velocity, $\Omega$ in accordance with Eq. (12) and delivers it as an output:

$$\Omega = A \tan^{-1} k\,x \tag{12}$$

where the constant A is given by

$$A\,\phi_S = \Omega \tag{13}$$

and it is stored in accordance with the angular velocity calculator 280.

Next, the generation of the first-order, second-order and fourth-order reference signals will be discussed. As explained before, the reference signal whose frequency is equal to the signal frequency to be detected is required for lock-in detection. In this embodiment, the reference signals are generated by sampling a square wave signal which is synchronous with the phase modulation signal.

The square wave signal of frequency $f_m$ generated by the programmable timer 160 is supplied to the digital signal processor 180 as shown in Fig. 1, and is applied to a digital input terminal 300 as shown in Fig. 3. A sampling circuit 310 checks the input state of the input terminal 300, whereupon it provides a numerical value +1 for an input of high level and numerical value -1 for an input of low level. Checking of the input to the input terminal by the sampling circuit

310 is performed every time there is input of interference signal data. Accordingly, the sampling circuit samples the input signal at a period corresponding to the sampling frequency $f_s$ and produces a square wave at values +1 or -1.

The sampling operation of the sampling circuit 310 causes the reflex frequency $\Delta f$ based on Eq. (6) to appear at the output of the sampling circuit 310. A band-pass filter 321 extracts the reflex frequency component $\Delta f$ from the output signal of the sampling circuit 310. The signal at frequency $\Delta f$ derived by the band-pass filter 321 has its phase adjusted by a phase shifter 331 and has its amplitude set to an appropriate value by an amplifier 341. The resulting signal is used as the first-order reference signal.

In the operations discussed above, the phase adjustment by the phase shifter 331 is important for enhancing the sensitivity of lock-in detection. Thus, the first-order reference signal is adjusted so as to be substantially in-phase with the first-order component signal to be detected in the multiplier 221, to make optimum the sensitivity of lock-in detection. Simultaneously, the plus or minus polarity of the angular velocity data for counterclockwise rotation is determined.

In lock-in detection, the reference signal must have a fixed phase relative to the input signal. If this does not happen, the D.C. signal level and polarity of lock-in detection output change with the phase. In this embodiment, all timing operations are derived from the crystal oscillator 140 and the programmable timer 160, and phase relationships do not change.

The generation of the second-order and fourth-order reference signals are similar to that of the first-order reference signal described above. In order to produce the signal of the frequency $2\Delta f$, however, the output signal of the band-pass filter 321 is multiplied by an integer by a multiplier 351. A band-pass filter 322 extracts the components of frequency $2\Delta f$ from the integral-times output of the multiplier 352, and the component of frequency $4\Delta f$ is derived from the product by a band-pass filter 324. The operations of phase shifters 332, 334 and amplifiers 342, 344 are the same as for the first-order reference signal.

When the apparatus is operated with the above arrangement, the interference signal can be sampled at a frequency lower than that of the interference signal, and the sampled signal may be processed by a A/D converter of low operating speed. Therefore, an A/D converter of high speed and high cost in unnecessary, permitting savings in cost and size. Furthermore, the required number of sampling data items decreases, and the time required for calculations etc. may be shortened, to give the advantage that the accuracy of the processing can be enhanced and the time of processing can be shortened.

Next, a practical example of the above embodiment will be described.

First, the frequency response characteristic of the optical fiber gyro is set at 30 Hz, and an A/D converter of 12 bits is employed as the A/D converter 130. The crystal oscillator 140 employed produces a frequency of 40 MHz, which is divided into clock signals at 2.5 MHz of 1/16 frequency and of 5 MHz of 1/8 frequency by the frequency divider 150, the clock signals being respectively fed to the programmable timer 160 and the microcomputer 170. In addition, a clock signal at a frequency of 40 MHz is fed to the digital signal processor 180. Since the microcomputer 170 has a data bus of 8 bits, data is transferred at two divided steps each handling one byte.

When the phase modulation frequency is about 20.5 kHz and the sampling frequency is set at 5kHz, the value of n is given as n = 4 which is the closest value to the phase modulation frequency, in accordance with Eqs. (6) to (8). With the above setting, the reflex frequency components of the fundamental wave component $f_m$, second-order harmonic component $2f_m$ and fourth-order harmonic component $4f_m$ of the interference signal appear as $\Delta f = 0.5$ kHz, $2\Delta f = 1$ kHz and $4\Delta f = 2$ kHz as illustrated in Fig. 2 (b).

In order to extract the reflex frequency components from the interference signal and on the basis of the commands of the microcomputer 170, the interference signal data items are passed through the band-pass filters 201, 202 and 204 of the digital signal processor 180 whose center frequencies are pre-set at frequencies $\Delta f$, $2\Delta f$ and $4\Delta f$. In this example, the digital signal processor 180 is operated by a clock signal of 40 MHz, so that a multiplication and an addition can be processed once in 100 nsec. Since the sampling frequency is 5 kHz (a period of 200 sec.), filter calculations based on at most 2000 multiplications and additions are possible.

However, the outputs of the band-pass 201, 202 and 204 contain not only the components of the signal frequencies $\Delta f$, $2\Delta f$ and $4\Delta f$ bit also other frequency components and noise. The $\Delta f$, $2\Delta f$ and $4\Delta f$ of components are therefore detected at high sensitivities by the lock-in operation, using the multipliers 221, 222 and 224 and the reference signals (the output signals of the components 341, 342 and 344) equal to the signal frequency components. Subsequently, the cut-off frequencies of the low-pass filters 231, 232 and 234 are set at 200 Hz, and D.C. components proportional to the center frequency components of the corresponding band-pass filters are extracted.

It is difficult, however, to achieve a low-pass filter having the cut-off frequency of 30 Hz in the form of a digital filter when the sampling frequency $f_s$ is set at 5 kHz. The reason is that the digital signal processor 180 used in this example executes a floating point calculation having a mantissa part of 4 bits and an exponent part of 6 bits, and the finite calculation makes it difficult to fabricate the filter whose cutoff frequency is very different from the sampling frequency. In this example, therefore, the diminution sampling units 241, 242 and 244 are placed behind respective low-pass filters 231, 232 and 234. These diminution sampling units 241, 242 and 244 are set at a frequency $f_d = 500$ Hz. Each of the diminution sampling units 241, 242 and 244 delivers one output data item for ten input data items so that the

sampling rate of the output data is changed from 5 kHz to 500 Hz.

As the frequency response of the optical fiber gyro is set at 30 Hz. Therefore frequency components of and above 30 Hz which are contained in the D.C. signals which are the outputs of the diminution sampling units are eliminated by the low-pass filters 251, 252 and 254. The outputs of the low-pass filters 251, 252 and 254 are processed by the dividers 261 and 262. The processed results are input to the angular velocity calculator 280 and are changed into a rotational angular velocity measurement.

Thus, the angular velocity of rotation is obtained with high precision.

An optical phase modulator having a structure in which an optical fiber is wound around a piezo-ceramic cylinder may be used in the present invention. In a phase modulation type optical fiber gyro, a phase modulator of this type has a mechanical resonance frequency $f_r$ which is determined by the dimenions and material of the piezo-ceramic cylinder. The phase modulation frequency $f_m$ is usually set in the vicinity of the mechanical resonance frequency $f_r$. The voltage amplitude of the phase modulation signal can be reduced by utilizing mechanical resonance.

In order to attain a predetermined phase modulation amplitude, the voltage amplitude of the phase modulation signal may be adjusted. Since, however, the mechanical resonance is used in the phase modulator, the phase modulation amplitude depends greatly upon the modulation frequency $f_m$. For this reason, the frequency with which the voltage amplitude of the phase modulation signal reaches an appropriate level and which can mitigate modulation distortion and fluctuation in a modulation characteristic needs to be selected as the phase modulation frequency $f_m$.

Nevertheless, even when the piezo-ceramic cylinders for use in the phase modulators are baked with the same dimensions and under the same conditions, there is normally a wide variation in the mechanical resonance characteristics. Thus, the phase modulation frequency $f_m$ differs from one phase modulator to another. In order to bring the mechanical resonance frequency $f_r$, to a predetermined value, it is known to polish the piezo-ceramic cylinder to achieve a suitable adjustment. The need for this polishing step is a serious obstacle to a reduction in the fabrication cost of the optical fiber gyro.

In this embodiment, as shown in Fig. 1, the microcomputer 170 is provided with means 190 for receiving external data, thereby making it possible to set the phase modulation frequency $f_m$ at an optimum value in accordance with the mechanical resonance characteristic of each individual phase modulator 50. Hence, the microcomputer 170 receives the phase modulation frequency $f_m$ in the form of data from means 190 and controls the programmable timer 160 so as to generate a square wave signal of this frequency. Similarly, the microcomputer 170 receives the sampling frequency $f_s$ in the form of data from the means 190 and controls the programmable time 160 so as to generate the pulses at the sampling timings of this frequency. In this embodiment, the setting of the data items of the phase modulation frequency $f_m$ and sampling frequency $f_s$, with which the reflex frequencies $\Delta f$, $2\Delta f$ and $4\Delta f$ determined by Eqs. (6) to (8) have predetermined values, is achieved using the means 190 to control the microcomputer 170. Accordingly, the filter processing steps of the digital signal processor 180 in Fig. 3 for the frequencies $\Delta f$, $2\Delta f$ and $4\Delta f$ become arithmetic processing steps which use the same filter coefficients at all times without regard to the value of the phase modulation frequency $f_m$.

The means 190 described above may provide the microcomputer 170 with either the phase modulation frequency $f_m$ or the sampling frequency $f_s$. The other frequency may be calculated from the one provided, by the microcomputer 170 in accordance with Eq. (6) under the condition that the reflex frequency $\Delta f$ is held constant. The reflex frequencies $\Delta f$, $2\Delta f$ and $4\Delta f$ can be altered so as to satisfy Eqs. (6) to (8) so that the phase modulation frequency $f_m$ is provided as external data and that the sampling frequency is held at a constant value. In this case, the filter calculations of the digital signal processor 180 need to change calculation coefficients in accordance with the alterations of the frequencies $\Delta f$, $2\Delta f$ and $4\Delta f$, and the microcomputer 170 instructs the digital signal processor 180 to change the calculation coefficients.

As stated above, the influence of the different characteristics of the phase modulators can be corrected by the means 190 for receiving external data so that the phase modulator 50 need not be of high precision and can have its cost minimized.

Fig. 4 shows a second embodiment of the present invention. The second embodiment differs from the first embodiment only in the method of supplying the external frequency data. Apart from this, other parts of this embodiment are similar to those of the embodiment of Fig. 1 and the same reference numerals are used. However, the second embodiment is furnished with a rewritable nonvolatile memory device 191. Data items representing the phase modulation frequency $f_m$ and sampling frequency $f_s$ which are set as appropriate for every phase modulator are recorded in the memory device 191. The microcomputer 170 reads out the frequency data items from the nonvolatile memory device 191 at the resetting of power-ON, and controls the operation of the programmable timer on the basis of the data items calculation. Similarly, either the reflex frequency or the sampling frequency may be fixed. The data items which are set as appropriate for each individual phase modulator are recorded in the nonvolatile memory device 191.

In this manner, once the optimum values corresponding to the characteristics of the phase modulator 50 have been recorded in the nonvolatile memory device 191 it is not necessary to supply input data each time the apparatus is switched on, and the labor of the input operation can be saved.

Fig. 5 shows a third embodiment of the present invention. In each of the first and second embodiments, the sampling means, timing generation means, arithmetic means and control means are shown as individual functional elements. The third embodiment uses a signal processing LSI 101 in which these elements are integrated on a single substrate. The signal processing LSI 101 includes therein a sample-and-hold circuit and an A/D converter as the sampling means, a digital numerical operation circuit as the arithmetic means, and a logical operation circuit and a memory circuit as the control means. Part of the memory circuit is a rewritable nonvolatile memory, in which data appropriate for each phase modulator is recorded. The control of the timing generation means and the transfer of the interference signal data by the control means, the generation of the phase modulation signal and sampling timings by the timing generation means, and the digital calculation processing of the interference signal by the arithmetic means are the same as in the first embodiment.

By constructing the detection circuit in the form of a single LSI as described above, the detector can be reduced in size, and the range of applications of the optical fiber gyro may be expanded.

Fig. 6 shows a fourth embodiment of the present invention. In the fourth embodiment, the operations of the programmable timer 160 and digital signal processor 180 are somewhat difference from those in the first embodiment, and a signal adder circuit 61 is included as will be described. The other components are the same as in the first embodiment, and the same reference numerals are used.

In the fourth embodiment, the programmable timer 160 genetates a first square wave signal of a frequency $f_{m1}$ and a second square wave signal of a frequency $f_{m2}$. These signals are input to the signal adder circuit 61, and the sum thereof is supplied to the phase modulator driver circuit 60. Accordingly, the phase modulator 50 is driven by a phase modulation signal which has both the frequencies $f_{m1}$ and $f_{m2}$ as its frequency components. First and second square wave signals are fed to the digital signal processor 1780, and they are utilized for lock-in detection of the frequency components in the same manner as in the first embodiment.

In consequence of cross modulation based on the two frequencies there is an interference signal spectrum with the frequencies $f_{m1}$, $f_{m2}$ and the higher harmonic components thereof, together with the beat frequency of Eq. (14) and the higher harmonic components thereof:

$$B = f_{m1} - f_{m2} \tag{14}$$

In this embodiment, the beat frequency and the higher harmonic components thereof are used for detection and correction of the Sagnac phase difference. Also, reflex frequencies produced by "down sampling" are used. The reflexes of the first and second frequencies $f_{m1}$ and $f_{m2}$ based on "down sampling" appear as:

$$\Delta f = f_{m1} - f_s \tag{15}$$

$$\Delta f + B = f_{m2} - f_s \tag{16}$$

In this embodiment, the Sagnac phase difference using the beat frequency components of lower frequencies as described above, so that the requirements of frequency characteristics at the input ends of the input buffer 110 and sample-and-hold circuit 120 can be mitigated. However, high frequencies may also be used. Since the first embodiment uses the reflex of the fourth-order higher harmonic component of the phase modulation frequency, response of the circuitry is required up to the frequency of the fourth-order higher harmonic component at stages previous to the completion of the sampling. In contrast, in this embodiment, the frequencies of the beat frequency components suffice, and the frequency characteristics of the input buffer 110 and sample-and-hold circuit 120 can be relieved.

As in the first embodiment, lock-in detection is used to extract the frequency spectrum components by the digital signal processor 180. The arrangements and operations of the lock-in detectors are the same as in the first embodiment, and only the frequencies of the reference signals are different. Thus, as illustrated in Fig. 7 the beat frequency B, reflex frequency $\Delta f$ and sum frequency $\Delta f + B$, and the higher harmonics thereof are needed.

Referring now to Fig. 8, methods for producing the reference signal frequencies will be described.

The first and second square wave signals of frequencies $f_{m1}$ and $f_{m2}$ are respectively supplied to digital input terminals 400 and 401 of the digital signal processor 180. As in the first embodiment, sampling circuits 410 and 411 refer to these signal inputs with the sampling frequency $f_s$ and generate numerical sequences of +1 and -1 in accordance with the input logic levels. The numerical sequences are respectively input to band-pass filters 420 and 421 having $\Delta f$ and $\Delta f + B$ as their center frequencies whereby signals of frequencies $\Delta f$ and $\Delta f + B$ ate produced. In addition, these signals are multiplied by each other using a multiplier 430, and a signal corresponding to the difference frequency B

between the signals is derived using a band-pass filter having B as its center frequency. As in the first embodiment, these signals of the respective frequencies are multiplied by integers so as to generate higher harmonic components, and they are converted into reference signals of appropriate amplitude levels and phase by phase shifters and amplifiers.

Next, a specific example of the fourth embodiment will be described. First, if the first modulation frequency $f_{m1}$ is set at 20.5 kHz and the second modulation frequency $f_{m2}$ at 21.5 kHz, the beat frequency B becomes 0.75 kHz in accordance with Eq. (14). The frequency spectrum of the interference signal is shown in Fig. 7. In this figure, assuming the sampling frequency $f_s$ to be 5 kHz, the reflex frequency component $\Delta f$ of the first modulation frequency $f_{m1}$ becomes 0.5 kHz, and the reflex frequency component $\Delta f + B$ of the beat frequency component (the second modulation frequency component $f_{m2}$) becomes 1.25 kHz. When the beat frequency component is used in this manner, the frequencies need not be handled up to the fourth-order higher harmonic frequency 82 kHz as in the first embodiment, but the frequencies of up to the second modulation frequency $f_m$ = 21.5 kHz may be handled, so that the frequency characteristics of the input buffer and the sample-and-hold circuit can be simplified.

As described above, the frequency characteristics to be attained may be of the lower frequency owing to the adoption of the present invention. Therefore the apparatus can be simplified, and the number of data items to be handled in the digital processing.

Fig. 9 shows a fifth embodiment of the present invention. The signal procesing circuit 100 of the fifth embodiment is substantially the same as that of the first embodiment, but the former differs from the latter in that it has a rewritable memory device 192 instead of the digital signal processor 180. As in the first embodiment, the interference signal is sampled and converted into the digital signal by the sample-and-hold circuit 120 and the A/D converter 130 in accordance with the sampling timings which the programmable timer 160 generates. The sampling timing signal from the progammable timer 160 is input to the microcomputer 170, and the sampled values of the interference signal are successively accumulated and stored in the rewritable memory device 192.

As illustrated in Fig. 10, the operation of the microcomputer 170 is divided into a data sampling period and a calculation processing period, which repeat alternately. The microcomputer 170 first accumulate a predetermined number of sampled values of the interference signal in the rewritable memory device 192 and subsequently reads out these differences of the interferometer. Then it calculates the angular velocity of rotation detected by the optical fiber gyro. As show in in Fig. 11 the microcomputer 170 reads out the interference signal data sampled in an equivalent time, from the rewritable memory device 192 and thereafter generates a signal waveform for one or more cycles of the time waveform of the interference signal, in the course of calculating the phase differences of the interferometer. The frequencies of the interference signal are analysed, on the basis of the composed waveform and using a well-known high-speed Fourier transform method.

As described above, according to this embodiment, the data sampling and the calculation processing are separated in time, so that the signal processing of the interference sensor is possible without requiring a numerical calculation processing capability of very high speed.

In any of the first to fifth embodiments explained above, the phase difference of the interferometer is determined by analyzing the frequency spectrum of the interference signal. As stated below, however, the phase difference of the interferometer can be determined even by computing the waveform moment of the time waveform of the interference signal.

P' is defined as indicated in Eq. (17) for the interference signal P which is expressed by Eq. (1):

$$P' = P - a_0 \qquad (17)$$

$$a_0 = (1/2\pi) \int_{-\pi}^{\pi} P d\theta \qquad \ldots\ldots(18)$$

Here, $a_0$ denotes the D.C. component of the interference signal. For P', the waveform moment m of order <u>m</u> is computed as follows:

$$\mu_m = \int_{-\pi}^{\pi} \theta_m P' d\theta \qquad \ldots\ldots(19)$$

$$= \begin{cases} 4\pi Kv\ \alpha_{2n} \cos \phi_s & (m=2n) \\ 4\pi Kv\ \beta_{2n} \sin \phi_s & (m=2n+1) \end{cases} \quad .....(20)$$

$\phi_s$ denotes the phase difference of the interferometer, and $\alpha_{2n}$ and $\beta_{2n}$ denote coefficients which are determined by the effective phase modulation index $\phi_e$. As is evident from Eq. (20), the m-th-order waveform moment of the interference signal is proportional to cos $\phi_s$ when m is an even number, and it is proportional to sin $\phi_s$ when m is an odd number. This is in a dual relationship with the fact that the evennumbered-order frequency spectrum of the interference signal is proportional to cos $\phi_s$, while the odd-numbered-order frequency spectrum thereof is proportional to sin $\phi_s$.

In each of the first to fifth embodiments, the phase difference $\phi_s$ of the interferometer can be determined by computing the waveform moment of the interference signal time waveform instead of calculating the frequency spectrum. The calculation of the frequency spectrum and that of the waveform moment may be combined so as to reduce the amount of calculation needed.

As described above, the adoption of the present invention enables the interference sensor to be of high precision and small size, so that the sensor may be applied in various uses.

Fig. 12 shows an example of a control system when the present invention is applied to sensors for an automobile.

An interference sensor 511 for measuring the yawing of the car body, an interference sensor 512 for measuring the rolling of the car body, and an interference sensor 510 for measuring the pitching of the car body are respectively installed in an automobile 500. Although, as illustrated, individual sensors are located in different places, they may be collectively located in one place.

The outputs of the respective sensors are fed to a signal processor 600 and are convered into controlling signals, which are sent to an input/output controller 700. This input/output controller 700 is supplied with the detection results of the interference sensors for e.g. a car speed, temperature in the interior of the car etc. Although not shown, the output of the yawing sensor which indicates the rotational direction and rotational angle of the automobile, is supplied from the input/output controller 700 to a navigation system. In the navigation system, the current position of the car is found using the above signal and the distance of travel evaluated by a separate speedometer or the like and is displayed by display means or the like and further the route leading to the destination, etc. may also be displayed.

In addition, the input/output controller 700 sends signals to an engine controller 800, an antiskid brake controller 900, an active suspension controller 550, a car height controller 560 and so forth.

When the automobile brakes the antiskid brake controller 900 controls the braking forces of the right and left wheels so as to generate torques opposite in sign to the angular velocity or rotation of the car body based on the signal representing the angular vlocity of rotation from the yawing sensor, and to decrease the absolute value of the signal representing the angular velocity of rotation, thereby to stop the automobile.

The active suspension controller 550 holds the car body stable while controlling the right and left and front and rear suspension elements so as to generate torques opposite in sign to the angular velocity of rotation from the pitching sensor 510 or the rolling sensor 512, and suppressing the absolute value of the signal representing the angular velocty of rotation so as to decrease that rotation.

In addition, the car receives a signal representing angular velocity from the rolling sensor 512 and holds the car body stable while controlling the suspension elements on the right and left of the car body so as to limit changes in the height of the car body.

It is also possible to employ the apparatus of the present invention in an arrangement in which the fiber loop 40 is mounted in a vertical plane so as to detect the rotation of the earth on its own axis, or in which the fiber loop 40 is turned round a vertical axis so as to find an absolute azimuth from a detected change in the angular velocity of the rotation of the earth on its own axis.

In the above description, an analysis was carried out on the basis of sampling the signal corresponding to the detection of the modulated and interfering beams. However, an equivalent effect can be achieved by applying an electronic modulation to the output of the detector which detects the modulated and interfering beams. A sixth embodiment of the present invention, shown in Fig. 13, illustrates such operation. In Fig. 13, components corresponding to components of the interference sensor shown in Fig. 1 are indicated by the same reference numerals.

In Fig. 13, the output of the converter (Phase Detector) 70 is amplified by an amplifier 200, and the resulting signal is modulated by a modulator 201. Thus, the signal from the modulator 201 has effectively had two modulations imposed on it, being the optical modulation imposed on the interfering beam by the optical phase modulator 50, and the second modulation imposed by the modulator 201. The modulation frequencies of these two modulations are different. The output of the modulator is passed via lock-in amplifiers 202 to an analog to digital and a digital to analog converter 203, which is controlled by the microcomputer 170. That microcomputer 170 also controls the lock-in amplifiers 202 and the phase modulator driver circuit 60.

The resultant processing is generally similar to the first to fifth embodiments, although sampling is then not necessary. However, it is possible to operate the interference sensor shown in Fig. 13 in combination with the sampling operations described earlier.

The seventh embodiment of the present invention is shown in Fig. 14. With the exception of the arrangement for modulating the signals, the arrangement is similar to the sixth embodiment of Fig. 13, and the same reference numerals are used for corresponding parts. In the embodiment of Fig. 14, however, the modulator 201 is omitted, and instead the microcomputer 170 supplies drive signals to the phase modulator drive circuit at two different frequencies $f_{m1}$ $f_{m2}$. These frequencies are different, so that the modulator 50 applies two different optical modulations to the interfering beams in the fiber loop 40. When the converter 70 detects the interference of those doubly-modulated beams, the signal is amplified via amplifier 200, the resulting input to the lock-in amplifiers 202 is exactly the same as the embodiment of Fig. 13. Therefore, a similar processing may be used, and indeed this can be combined with the sampling arrangement described with reference to the first to fifth embodiments.

Embodiments of the present invention operating in the time domain will now be described with reference to Figs. 15 to 24. Fig. 15 shows a general view of the interference sensor operating in the time domain, and it can immediately be seen that the general structure is similar to that of the first embodiment of Fig. 1, except that there is a difference in the processing circuit, which is therefore indicated at 1000. Other components, which correspond to the interfering sensor of Fig. 1, are indicated by the same reference numerals. Before describing the processing circuit 1000, however, it is necessary to re-consider the characteristics of the interference signal which is detected by the converter 70.

Assuming the characteristic of the phase modulator 50 to be ideal, the optical phase difference $\psi$ can be expressed by equation (21) and equations (4) and (5)

$$\psi = \phi s + \eta \cos\theta \qquad (21)$$

where $\eta$ is an effective phase modulation index.

The eighth embodiment takes the maximum and minimum point of the interference signal waveform as waveform characteristic points.

At the maximum and minimum points, the differential of the interference signal P must satisfy the following equation (22) as a necessary condition.

$$dP/dt = -K\nu wm\eta \sin\theta \sin \psi = 0 \qquad (22)$$

assuming $d\phi s/dt = 0$ and d /dt = 0.

Therefore, at time t when $\sin\theta = 0$ or $\sin\psi = 0$, the interference signal will take an extremum.

The first embodiment uses the following equations (23) to (25) as design conditions of the optical fiber gyro.

Effective phase modulation index:

$$\pi/2 \leqq \eta < \pi \qquad (23)$$

Phase difference to be measured:

$$|\phi s| < \pi/2 \qquad (24)$$

Optical phase difference:

$$|\psi| < \pi \qquad (25)$$

Under these conditions, the interference signal waveform will be as shown in Fig. 14, with four maximum and minimum points appearing in one cycle of the phase modulation signal.

Suppose the solutions for $\sin\theta = 0$ are $\theta 1$ and 83 and those for $\sin\psi = 0$ are $\theta 2$ and $\theta 4$. Then with $\theta 1 = 0$ taken as a reference, $\theta 3 = \pi$. From equations (21) and (24) it follows that:

$$\phi s = - \eta \cos\theta 2 = - \eta \cos\theta 4 \qquad (26).$$

Hence, the time positions of θ2, θ4 will change with the optical phase difference being measured ϕs (in this embodiment, proportional to the rotational angular velocity) according to equation (25).

The minimum points θ1, θ3 are fixed points independent of ϕs. η is a constant determined by the phase modulator characteristic and the phase modulator drive signal.

When the phase difference of θ2 (or θ4) with respect to θ1 (or θ3) is measured, the phase difference to be measured ϕs can be determined from equation (26).

Since, from equation (21), the phase distance between θ2 and θ3 (= π) and that between θ4 and θ3 (= π) are equal, it is also possible to determine the phase difference ϕs by measuring the phase difference between θ2 and θ4 and solving the equation (26).

Measuring the phase difference between the maximum and minimum points is equivalent to measuring the time intervals between each point, as is seen from equation (4). So, this embodiment measures the time difference.

As a time reference for measuring the time intervals, a highly accurate and stable clock can be obtained relatively easily with a quartz oscillator. The use of high-speed clock will increase the resolution and therefore the magnitude of the effective digits of measurement, expanding the dynamic range.

As is obvious from equation (26), when ϕs = 0, which represents a zero rotational angular velocity, cosθ2 = cosθ4 = 0, that is, θ2 = θ4 - 90° ± 180°.

In other words, when ϕs = 0, ϕs can be expressed as ϕs = ±η cos(90°+Δθ) = ±η sin(Δθ). A change in phase that corresponds to a change in the value of the sine function ±ηsin(Δθ) becomes maximum at a point close to ϕs = ± ηsin (Δθ) = 0.

Equation (5) indicates that the change in time position is proportional to the phase change.

Thus, the measurement of ϕs based on the measurement of time position at points θ2 and θ4 according to this embodiment can have a maximum measuring sensitivity at a point close to ϕs = 0.

In this way, this invention is intended to improve the ease and performance of interference measurement by making use of high precision clocking.

Now, the signal processing circuit 1000 of the eighth embodiment will be explained.

Fig. 17 shows a block diagram of the signal processing circuit 1000 of the eighth embodiment.

In Fig. 17 there is shown a photoelectric conversion circuit 70 to convert the interference light into an electric signal and output an interference signal. The interference signal from the photoelectric conversion circuit 70 is applied to a differentiating circuit 1010 where it is differentiated. A zero-crossing detection circuit 1020 detects the zero-crossing point of the differential signal and generates an extremum timing pulse train representing the times at which the interference signal becomes the maximum or minimum.

A level comparing circuit 1040 compares the level of the interference signal with a specified threshold level and outputs a rectangular level signal in dependence on the result of comparison.

A fixed phase pulse generating circuit 1030 generates a specified phase timing by taking as a reference input a modulating signal from the phase modulator drive circuit (PMDC) 60.

A count control circuit 105 generates a count start pulse and a count stop pulse for controlling the operation of a counting circuit 106 in dependence on the extremum timing pulse from the zero-crossing detection circuit 102, the fixed timing pulse from the fixed phase pulse generating circuit 103, and the level signal from the comparison circuit 104.

In response to the count start and stop pulses, the counting circuit 106 counts the clock pulses output from the clock circuit 107. An arithmetic and logic unit 108 reads the count value from the counting circuit 106, calculates the phase difference ϕs to be measured by using equation (26), and converts that phase difference into a measurement of the angular velocity of rotation.

A suitable device for detecting the time at which the maximum and minimum of the interference signal occur may be, for example, a peak detection circuit.

The time waveform of the interference signal may use other characteristic points such as a waveform center, that is determined from the n-th order moment of the time waveform.

The operation of the eighth embodiment will now be described.

The zero-crossing detection circuit 1020 of this embodiment generates four extremum timing pulses in one cycle of the phase modulation signal.

To calculate ϕs by using equation (26), each of the four pulses must be correspondent to θ1 to θ4. For this purpose, this eighth embodiment provides a fixed phase pulse generating circuit 1030, which generates a specified phase timing according to the modulation signal supplied as a reference input from the phase modulator drive circuit 60, and a level comparison circuit 1040 that compares the interference signal level with the specified threshold level and outputs a rectangular level signal according to the result of comparison.

The count control circuit 1050 generates pulses to start and stop counting, to control the operation of the counting circuit 1060, in dependence on the extremum timing pulse from the zero-crossing detection circuit 1020, the fixed timing pulse from the fixed phase pulse generating cuircuit 1030, and the level signal from the level comparison circuit 1040. In this embodiment, as shown in Figure 16, the count start pulse and the count stop pulse are issued at the

maximum point θ2 and the maximum point θ4, respectively. Therefore the time interval between the points θ2 and θ4 can be measured. The counting circuit 1060 counts the clock pulses supplied from the clock circuit 107 according to the count start and stop pulses from the count control circuit 1050. The arithmetic and logic unit 1080 reads the count value from the counting circuit 1060 to calculate the phase difference θs to be measured by using equation (26) and then transforms the calculated phase difference into a rotating angular velocity. The fixed timing pulse gives the start timing for this series of operations.

The phase modulator drive circuit 60 generates a phase modulation signal according to the clock pulses from the count clock generating circuit 1070. Hence, the phase modulator drive circuit 60 and the signal processing circuit 1000 operate in synchronism with each other.

A ninth embodiment of this invention will now be described.

When a piezo-ceramic element is used as the phase modulator, the modulation characteristic may exhibit a significant temperature dependency. This in turn causes the effective phase modulation index to drift with temperature, causing the output of the gyro to display a characteristic.

To eliminate this unwanted temperature dependency, means for compensating for variations in the modulation index is provided in the signal processing circuit 1000 of the ninth embodiment.

In the ninth embodiment, the design conditions for the optical fiber gyro are given by the following equations (27) to (29).

$$\text{Effective phase modulation index: } \pi \leqq \eta < 2\pi \quad (27)$$

$$\text{Phase difference to be determined: } |\phi s| < \pi \quad (28)$$

$$\text{Optical phase difference: } |\psi| < 2\pi \quad (29)$$

In this case, the time waveform of the interference signal has eight maximum and minimum points during one cycle of the phase modulation signal starting from the zero point of the differential signal, as shown in Figure 18.

As shown in Figure 18, these maximum and minimum values are designated θ1 to θ8. θ1 to θ4 are solutions that satisfy $\sin\theta = 0$ and $\sin\psi = 0$, as in the case of the eighth embodiment. Thus, θ1 = 0 and θ3 = π are fixed points independent of the phase difference to be determined ϕs (in this embodiment, proportional to the rotating angular velocity). θ5 = π to θ8 are solutions that satisfy $\sin\psi = 0$, a condition that is added when the design conditions of the optical fiber gyro are converted into equations (27) to (29). θ2 and θ4, and θ5 to θ8 are all dependent on the phase difference ϕs. Therefore, ϕs can be determined by measuring the phase difference or angular velocty of rotation so as to decrease that rotation.

In addition, the car receives a signal representing angular velocity from the rolling sensor 512 and holds the car body stable while controlling the suspension elements on the right and left of the car body so as to limit changes in the height of the car body.

It is also possible to employ the apparatus of the present invention in an arrangement in which the fiber loop 40 is mounted in a vertical plane so as to detect the rotation of the earth on its own axis, or in which the fiber loop 40 is turned round a vertical axis so as to find an absolute azimuth from a detected change in the angular velocity of the rotation of the earth on its own axis.

In the above description, an analysis was carried out on the basis of sampling the signal corresponding to the detection of the modulated and interfering beams. However, an equivalent effect can be achieved by applying an electronic modulation to the output of the detector which detects the modulated and interfering beams. A sixth embodiment of t

The count control circuit 1050 generates a count start pulse at the phase timing θ1 and a first and second count stop pulse at the phase timing θ2 and θ3 respectively.

The counting circuit 1070 and the counting circuit 1090 measure the time interval Δ1 between θ5 and θ1 and a time interval Δ2 between θ2 and θ1, according to the instruction of the count start pulse and the first and second count stop pulses. At this time, the following equations (30) and (31) hold.

$$\phi s + \eta \cos wm\Delta 1 = \pi \quad (30)$$

$$\phi s + \eta \cos wm/\Delta 2 = 0 \quad (31)$$

The arithmetic and logic circuit 1080 solves the equations (30) and (31) as simultaneous equations for $\phi$s and $\eta$. When the effective phase modulation index $\eta$ thus obtained differs from a specified value (equation (5), the arithmetic and logic circuit 1080 adjusts the control signal to the phase modulator drive circuit 60 to keep at a specified value. The process of deriving the rotational angular velocity from the phase difference $\phi$s is the same as that carried out in the eighth embodiment.

As with the eighth embodiment, the fixed timing pulse gives the start timing for the above sequence of operations.

Rather than adjusting the control signal to the phase modulator drive circuit 60 to keep $\eta$ at a specified value, the arithmetic and logic circuit 1080 may compensate for the quantity corresponding to the deviation in the value $\eta$.

Next, we will describe a tenth embodiment. Fig. 20 shows the configuration of the signal processing apparatus 100 of the third embodiment.

The conditions under which the optical fiber gyro of this embodiment is designed are similar to those of the eighth embodiment, except that a local oscillator 160 is provided to introduce a frequency converting means to improve the accuracy of measuring the extremum timing phase difference.

Fig. 20 shows the configuration of a signal processing apparatus according to the tenth embodiment.

In Fig. 20, the local oscillator 1600 generates a locally oscillated signal, which is a sinusoidal wave of angular frequency $w_z$, which is defined as follows.

$$w_z = w_m - \Delta w \qquad (32)$$

The local oscillation frequency $w_z$ differs from the phase modulation angular frequency $w_m$ by an angular frequency $\Delta$w. This oscillator operates according to the clock signals generated by the count clock generating circuit 1070.

Again the photoelectric conversion circuit 70 transforms the interference light into an electric signal and thereby generates an interference signal. The interference signal outputted from the photoelectric conversion circuit 70 enters the differentiating circuit 1010, where it is differentiated. The zero-crossing point of the differential signal is detected by the zero-crossing detection circuit 1020. A phase measuring oscillator 110 receives the extremum timing level from the zero-crossing detection circuit 102 and the level signal from the level comparison circuit 104 and generates a measurement-object signal, which is a sinusoidal wave whose zero-crossing point is at the phase of the maximum point. It also receives the fixed timing pulse from the fixed phase pulse generating circuit 103 and generates a measurement reference signal, being a sinusoidal wave whose zero-crossing point is the phase. The timing chart of these signals is shown in Fig. 21. The angular frequencies of the measuring signal and measurement reference signal are equal to the phase modulation angular frequency $w_m$.

The measuring signal outputted from the phase measuring oscillator 1100 is supplied to a mixer circuit 1110 where it is multiplied by the locally oscillated signal. Then, the output of the mixer circuit 1110 is fed to a low-pass filter 1130 which extracts only a measurement-object beat signal whose angular frequency is equal to the difference frequency $\Delta$ w between the phase modulation angular frequency $w_m$ and the locally oscillated frequency $w_z$.

In other words, the frequency is changed by extracting, from a signal containing frequency components representing both the sum and difference of angular frequencies of two signals obtained as a result of multiplication, only the frequency component that represents the angular frequency difference.

To obtain the measurement reference signal, the same operation is performed, i.e., the measurement reference signal is fed to a mixer circuit 1120 and a low-pass filter 1140 and converted into a measurement reference beat signal whose angular frequency is equal to $\Delta$ w.

The count control circuit 1050 detects the zero-crossing points of the measurement reference beat signal and the measurement beat signal, and generates the count start and stop pulses at the corresponding zero-crossing timing. The counting circuit 1060, in response to the instruction of the count start and stop pulses, counts the count clock pulses from the count clock generating circuit 1070. The arithmetic and logic circuit 1080 reads the count value from the counting circuit 1060 to calculate the target phase difference $\phi$s and then converts it into a measurement of the angular velocity of rotation.

The phase modulator drive circuit 60 generates a phase modulation signal according to the count clocks from the count clock generating circuit 1070.

Now, the operation of the tenth embodiment will be described below.

Since the phase of the measurement reference signal is fixed and known, calculating the angular velocity output of the optical fiber gyro by using the equation (26) needs only measuring the phase difference $\Delta\theta$ of the measurement signal with respect to the measurement reference signal, as mentioned in the eighth embodiment. Since there are two maximum points in one cycle of the phase modulation signal, as in the eighth embodiment, an alternative is to generate first and second measurement-object signals at these maximum point timings. In this case, the first and second maximums can easily be distinguished from each other by taking the fixed timing pulse as a reference. The phase difference

of the light beams can be obtained from the phase difference between the first and second measurement-object signals.

Thus, in the tenth embodiment the measuring signal and the measuring reference signal are mixed with the locally oscillated signal to produce a low-frequency beat signal.

The measuring signal outputted from the phase measuring oscillator 1100 is fed to the mixer circuit 1110 to be multiplied by the locally oscillated signal. The output of the mixer circuit 1110 is passed through the low-pass filter 1130 to be converted into a measurement-object beat signal whose angular frequency is equal to the difference frequency $\Delta w$ between the phase modulation angular frequency $w_m$ and the locally oscillated frequency $w_z$.

The same operation is carried out also on the measurement reference signal. The measurement reference signal is sent to the mixer circuit 1120 and the low-pass filter 1140, and is transformed into a measurement reference beat signal of an angular frequency of $\Delta$ w.

The period T' of these beat signals is expressed by equation (33).

$$T' = 2\pi/\Delta w \qquad (33)$$

In the above frequency conversion process, if the low-pass filters 113, 114 have the same phase characteristics, the phase difference between the measurement object signal and the measurement reference signal is retained as the phase difference between the measurement beat signal and the measurement reference beat signal.

In other words, as shown in Fig. 22, the phase relationship between the measurement-object beat signal and the measurement reference beat signal is identical to that between the measurement-object signal and the measuring reference signal before frequency conversion. Because the frequency has shifted to the beat signal frequency $\Delta$ w in the low frequency region, the measuring of the phase difference becomes relatively easy.

If the phase characteristics of the low-pass filters are not strictly identical, the offset phase difference that depends on the phase characteristic of the filter circuits may be examined beforehand and compensated for accordingly.

The detection of the phase difference between the measurement-object beat signal and the measurement reference beat signal can be realized as in the first embodiment.

That is, in Fig. 20 the count control circuit 1050 detects the zero-crossing points of the measurement reference beat signal and the measurement-object beat signal and generates count start and stop pulses at these zero-crossing timings.

In response to the pulses from the count control circuit 1050, the counting circuit 106 counts the clock pulses, the count value of which is supplied to the arithmetic and logic circuit 1080 which calculates the angular velocity according to equation (26), as the first embodiment. The timing relationships between these signals is shown in Fig. 22.

As explained above, the tenth embodiment shifts the phase difference measurement to the low frequency range by the frequency conversion, permitting measurement of phase difference or time integral with a higher resolution compared with that of the eighth embodiment when the same clock frequency is used.

In the tenth embodiment the locally oscillated signal, the measurement-object signal, and the measurement reference signal employ sinusoidal waves. However, the reference signals may be rectangular wave signals or other cyclically recurring signals. When rectangular waves are used, the mixer circuits 1110, 1120 may be formed by logic circuits using Exclusive-OR gates.

The frequency conversion employed in the tenth embodiment may be achieved by other means.

Next, an eleventh embodiment will be described. The eleventh embodiment mixed the interference signal and the phase modulation signal with the locally oscillated signal and modulates them into low-frequency signals.

Fig. 23 shows the configuration of the signal processing circuit 1000 of the eleventh embodiment.

The mixer circuit 1110 and the low-pass filter 1130 perform frequency conversion of the interference signal, while the mixer circuit 1120 and the low-pass filter 1140 perform frequency conversion of the phase modulator drive signal. A waveform shaping circuit 1200 modifies the shape of the locally oscillated signal generated by the local oscillator 1600. Other components are identical to those of the eighth embodiment, and corresponding reference numerals are used.

The operation of the eleventh embodiment will be now explained.

The design conditions of the optical fiber gyro of this embodiment are the same as those of the eighth embodiment, and the timings of signals are similar, except that the signals are processed in a low frequency range after the frequency conversion.

This reduces the weight in terms of phase or time integral measurement of each count clock pulse generated by the count clock generating circuit 1070, improving the resolution of measurement through counting a large number of pulses.

In order to retain the time waveform of the interference signal in the low frequency range, the locally oscillated signal must be such that a phase modulation angular frequency and its harmonic component contained in the locally oscillated signal have equal amplitude intensities. For this purpose, the eleventh embodiment includes a shaping circuit

1020 that modifies the shape of the locally oscillated signal generated by the local oscillator 1600.

While in the eleventh embodiment the time waveform of the signal is retained after the frequency conversion, the frequency conversion for retaining the time waveform need not be performed. Instead, other frequency conversion may be employed that will retain the correspondence between the signals before and after frequency conversion. In this case, the time intervals between points on the frequency-converted signal that correspond to the waveform characteristic points of the signal before being subjected to the frequency conversion may be measured to determine the phase difference between the interfering signals.

Next, a twelvth embodiment will be described.

The twelvth embodiment achieves frequency conversion by modulating the intensity of a light source 70 with a locally oscillated signal. This permits one mixer circuit in the eleventh embodiment to be eliminated. To retain the interference signal waveform in the low frequency region, each of the frequency spectra of the local oscillated signal is made to have equal amplitudes, as in the eleventh embodiment.

Fig. 24 shows the configuration of the signal processing apparatus of the twelvth embodiment.

The construction of the signal processing apparatus of the twelfth embodiment is similar to that of the eleventh embodiment except that the mixer circuit for mixing the interference signal and the locally oscillated signal is omitted. Thus, detailed explanation of the configuration of the circuit 1000 is not necessary.

Embodiments of the invention when applied to an optical fiber gyro have been discussed. However, this invention makes use of general properties of waves and thus can be applied not only to an optical fiber gyro but also to any apparatus or technique whereby physical quantities are measured by the interference of ) waves, such as phase-modulated electromagnetic waves (including light), sound waves or electron beams.

In the above eighth to twelfth embodiments, consideration is given to the time waveform of the interference signal and the optical phase difference of interfering waves is determined by measuring the phases of the characteristic points of the time waveform, i.e., time position or time interval of the characteristic points.

Also, as described above, an interference sensor according to the present invention permits lower frequencies to be processed owing to e.g., the use of "down sampling" and makes it possible to execute digital processing which has not been achievable with known interference sensors handling higher frequencies. This has the advantage that the interference sensor can be made small in size but provide good accuracy and that the interference sensor of the present invention may be applied to a rotational measuring sensor etc. for an automobile etc.

## Claims

**1.** An interference sensor for measuring a physical quantity, comprising:

a source (10) for generating optical radiation;
means (40) for generating first and second radiation beams from said optical radiation, the phase relationship between the first and second radiation beams being dependent on said physical quantity;
an optical phase modulator (50) for modulating said first and second radiation beams with an optical phase modulation frequency $f_m$;
means (22) for causing said first and second radiation beams to interfere and thereby to generate an interference beam;
means (70) for generating an electronic interference signal from said interference beam; and
an analyser (100) for analysing said electronic interference signal to derive the optical phase difference between the first and second radiation beams, thereby to measure said physical quantity;

characterised in that:

said analyser (100) has means (120) for sampling the electronic interference signal at a sampling frequency $f_s$ to obtain a series of sampled data, and means (17) for extracting aliasing frequency components $\Delta f$ from the series of sampled data in accordance with a relationship $\Delta f = f_m - nf_s$, where n is an integer, and means for deriving the optical phase difference from a parameter of the extracted aliasing frequency components.

**2.** An interference sensor according to claim 1, wherein the predetermined sampling frequency $f_s$ is less than the frequency $f_m$.

**3.** An interference sensor according to claim 1 or claim 2, wherein said means (40) for generating first and second radiation beams is a loop of optical fibre arranged such that said first and second radiation beams propagate in opposite directions around said loop.

**4.** An interference sensor according to any one of the preceding claims, having means (150) for varying said predetermined sampling frequency $f_s$.

**5.** An interference sensor according to any one of the preceding claims, wherein said analyser (100) also has means (201) for electronically modulating said electronic interference signal by a periodic electronic modulation of predetermined frequency to obtain the series of sampled data.

**6.** An interference sensor according to any one of the preceding claims, further including means (60) for imposing a further optical phase modulation on said first and second radiation beams at a second modulation frequency, and said analyser (100) is arranged to analyse said interference signal in dependence on said further optical phase modulation.

**7.** An interference sensor according to any preceding claim wherein the means for sampling effects sampling at the sampling frequency less than the first modulation frequency and the means for extracting aliasing frequency components extracts aliasing frequency components so that harmonies thereof always have a frequency less than the first modulation frequency.

**8.** An interference sensor according to any preceding claim wherein the means for deriving the optical phase difference includes means for demodulating the extracted aliasing frequency components with a frequency signal obtained by sampling the first modulating frequency at the sampling frequency.

**9.** An interference sensor for measuring a physical quantity, comprising:

a source (10) for generating optical radiation;
means (40) for generating first and second radiation beams from said optical radiation, the phase relationship between the first and second radiation beams being dependent on said physical quantity;
an optical phase modulator (50) for modulating said first and second radiation beams with an optical phase modulation frequency $f_m$;
means (22) for causing said first and second radiation beams to interfere and thereby to generate an interference beam;
means (70) for generating an electronic interference signal from said interference beam; and
an analyser for analysing said electronic interference signal to derive the optical phase difference between the first and second radiation beams, thereby to measure said physical quantity;

characterised in that:
said analyser has means (201) for electronically modulating said electronic interference signal by a periodic electronic modulation of at least one modulation frequency to obtain a modulated signal; and means (170) for deriving a parameter of at least one beat frequency component between the frequency $f_m$ and said at least one modulation frequency, thereby to derive said optical phase difference.

**10.** An interference sensor according to claim 9, further including means (60) for imposing a further optical phase modulation on said first and second radiation beams at a second modulation frequency and said analyser (100) is arranged to analyse said interference signal in dependence on said further optical phase modulation.

**11.** An interference sensor for measuring a physical quantity, comprising:

a source (10) for generating optical radiation;
means (40) for generating first and second radiation beams from said optical radiation, the phase relationship between the first and second radiation beams being dependent on said physical quantity;
an optical phase modulator (50) for modulating said first and second radiation beams with an optical phase modulation of a first modulation frequency $f_{m1}$;
means (22) for causing said first and second radiation beams to interfere and thereby to generate an interference beam;
means (70) for generating an electronic interference ' signal from said interference beam; and
an analyser (100) for analysing said electronic interference signal to derive the optical phase difference between the first and second radiation beams thereby to measure said physical quantity;

characterised in that:

the interference sensor (100) further includes means (60) for imposing a further optical phase modulation on said first and second radiation beams at a second modulation frequency $f_{m2}$; and
said analyser (100) is arranged to analyse said interference signal in dependence on said further optical phase modulation, and means for deriving a parameter of at least one beat frequency component between said first and second modulation frequencies, thereby to derive said optical phase differences.

**12.** An interference sensor according to claim 9, or claim 11, wherein said at least one beat frequency component is based on the difference between:
a) the difference between the product of said first modulation frequency and a first integer and the product of said second modulation frequency and a second integer.

**13.** An interference sensor according to any preceding claim wherein said parameter is an amplitude of the extracted frequency components.

**14.** An interference sensor according to any preceding claim wherein said parameter is a phase of the extracted aliasing frequency components.

**15.** A vehicle control system having

a) an interference sensor according to any preceding claim;
b) means for generating a vehicle control signal from the measurement of said physical quantity; and
c) means responsive to said vehicle control signal for controlling said vehicle.

**16.** A method of measuring a physical quantity, comprising the steps of:

a) generating first and second radiation beams such that the phase relationship between the first and second beams is dependent on said physical quantity;
b) modulating said first and second radiation beams with an optical phase modulation frequency $f_m$;
c) causing said modulated first and second beams to interfere to as to generate an interference beams;
d) generating an electronic interference signal from said interference beams; and
e) analysing said electronic interference signal to derive the optical phase difference between the first and second radiation beams, thereby to measure said physical quantity;

characterised in that:
said step (e) includes sampling the electronic interference signal at a sampling frequency $f_s$ to obtain a series of sampled data and extracting aliasing frequency components Δf from the series of sampled data in accordance with a relationship $\Delta_f = f_m - nf_s$, where n is an integer, and means for deriving the optical phase difference from a parameter of the extracted aliasing frequency components.

**17.** A method of measuring a physical quantity, comprising the steps of:

a) generating first and second optical radiation beams such that the phase relationship between the first and second beams is dependent on said physical quantity;
b) modulating said first and second optical radiation beams with an optical phase modulation frequency $f_m$;
c) causing said modulated first and second beams to interfere so as to generate an interference beam;
d) generating an electronic interference signal from said interference beam; and
e) analysing said electronic interference signal to derive the optical phase difference between the first and second radiation beams, thereby to measure said physical quantity;

characterised in that:
said step (e) includes modulating said electronic interference signal by a periodic electronic modulation of at least one modulation frequency to obtain a modulated signal, and investigating at least one beat frequency component between the optical phase modulation frequency and said at least one modulation frequency.

**18.** A method of measuring a physical quantity, comprising the steps of:

a) generating first and second optical radiation beams such that the phase relationship between the first and second beams is dependent on said physical quantity;

b) modulating said first and second optical radiation beams with an optical phase modulation frequency $f_{m1}$;
c) causing said modulated first and second beams to interfere so as to generate an interference beam;
d) generating an electronic interference signal from said interference beam; and
e) analysing said electronic interference signal to derive the optical phase difference between the first and second radiation beams, thereby to measure said physical quantity;

characterised in that:
the method further includes the step of imposing a further optical phase modulation $f_{m2}$ on said first and second radiation beams at a second modulation frequency, and investigating at least one beat frequency component between said first and second modulation frequencies.

**Patentansprüche**

**1.** Interferenzmeßgerät zur Bestimmung einer physikalischen Größe mit

einer optischen Strahlungsquelle (10),
einer Einrichtung (40) zur Erzeugung eines ersten und zweiten Strahles aus dieser optischen Strahlung, wobei die Phasenbeziehung zwischen erstem und zweitem Strahl von der physikalischen Größe abhängig ist,
einem optischen Phasenmodulator (50) zur Modulation des ersten und zweiten Strahles mit einer optischen Phasenmodulationsfrequenz $f_m$,
einer Einrichtung (22), mittels derer der erste und zweite Strahl zur Interferenz gebracht werden, um einen Interferenzstrahl zu erzeugen,
einer Einrichtung (70) zur Erzeugung eines elektronischen Interferenzsignals aus dem Interferenzstrahl und einem Analysegerät (100) zur Untersuchung des elektronischen Interferenzsignals, um hieraus die optische Phasendifferenz zwischen dem ersten und dem zweiten Strahl zu ermitteln und somit die physikalische Meßgröße zu bestimmen,

dadurch **gekennzeichnet**, daß
das Analysegerät (100) eine Einrichtung (120) zum Abtasten des elektronischen Interferenzsignals mit einer Abtastfrequenz $f_s$ aufweist, um eine Reihe von Abtastdaten zu erhalten, weiterhin eine Einrichtung (17) zur Entfernung von Komponenten $\Delta f$ der Faltungsfrequenz aus der Reihe von Abtastdaten gemäß der Beziehung $\Delta f = f_m - nf_s$, mit ganzzahligem n, und einer Einrichtung zur Ableitung der optischen Phasendifferenz aus einem Parameter der entfernten Komponenten der Faltungsfrequenz.

**2.** Interferenzmeßgerät gemäß Anspruch 1, dadurch gekennzeichnet, daß die vorbestimmte Abtastfrequenz $f_s$ kleiner als die Frequenz $f_m$ ist.

**3.** Interferenzmeßgerät nach Anspruch 1 oder 2, dadurch gekennzeichnet, daß die Einrichtung (40) zur Erzeugung des ersten und zweiten Strahls als Lichtleiterschleife derart ausgeführt ist, daß der erste und der zweite Strahl sich in der Schleife in entgegengesetzter Richtung ausbreiten.

**4.** Interferenzmeßgerät nach einem der vorhergehenden Ansprüche, gekennzeichnet durch eine Einrichtung (150) zur Variation der vorbestimmten Abtastfrequenz $f_s$.

**5.** Interferenzmeßgerät nach einem der vorhergehenden Ansprüche, dadurch gekennzeichnet, daß das Analysegerät (100) eine Einrichtung (201) zur elektronischen Modulation des elektronischen Interferenzsignals mittels periodischer, elektronischer Modulation einer festgelegten Frequenz aufweist, um die Reihe von Abtastdaten zu erhalten.

**6.** Interferenzmeßgerät nach einem der vorhergehenden Ansprüche, gekennzeichnet durch eine Einrichtung (60) zur Aufprägung einer weiteren optischen Phasenmodulation einer zweiten Modulationsfrequenz auf den ersten und den zweiten Strahl, wobei das Analysegerät (100) das Interferenzsignal in Abhängigkeit dieser weiteren optischen Phasenmodulation untersucht.

**7.** Interferenzmeßgerät nach einem der vorhergehenden Ansprüche, dadurch gekennzeichnet, daß die Abtasteinrichtung bei geringeren Abtastfrequenzen als die erste Modulationsfrequenz arbeitet, und daß die Einrichtung zur Entfernung der Komponenten der Faltungsfrequenz diese Komponenten derart entfernt, daß ihre Harmonischen immer eine kleinere Frequenz als die erste Modulationsfrequenz besitzen.

8. Interferenzmeßgerät nach einem der vorhergehenden Ansprüche, dadurch gekennzeichnet, daß die Einrichtung zur Ableitung der optischen Phasendifferenz Mittel zur Demodulation der entfernten Komponenten der Faltungsfrequenz mit einem Frequenzsignal aufweist, das durch Abtasten der ersten Modulationsfrequenz bei der Abtastfrequenz erzeugt wird.

9. Interferenzmeßgerät zur Bestimmung einer physikalischen Größe mit

einer optischen Strahlungsquelle (10),
einer Einrichtung (40) zur Erzeugung eines ersten und zweiten Strahles aus dieser optischen Strahlung, wobei die Phasenbeziehung zwischen erstem und zweitem Strahl von der physikalischen Größe abhängig ist,
einem optischen Phasenmodulator (50) zur Modulation des ersten und zweiten Strahles mit einer optischen Phasenmodulationsfrequenz $f_m$,
einer Einrichtung (22), mittels derer der erste und zweite Strahl zur Interferenz gebracht werden, um einen Interferenzstrahl zu erzeugen,
einer Einrichtung (70) zur Erzeugung eines elektronischen Interferenzsignals aus dem Interferenzstrahl und einem Analysegerät (100) zur Untersuchung des elektronischen Interferenzsignals, um hieraus die optische Phasendifferenz zwischen dem ersten und dem zweiten Strahl zu ermitteln und somit die physikalische Meßgröße zu bestimmen,

dadurch **gekennzeichnet**, daß
das Analysegerät eine Einrichtung (201) zur elektronischen Modulation des elektronischen Interferenzsignals mittels periodischer elektronischer Modulation bei mindestens einer Modulationsfrequenz aufweist, um ein moduliertes Signal zu erzeugen, und eine Einrichtung (170) zur Ableitung eines Parameters aus zumindest einer Komponente der Überlagerungsfrequenz aus der Frequenz $f_m$ und zumindest einer der Modulationsfrequenzen, um hieraus die optische Phasendifferenz zu bestimmten.

10. Interferenzmeßgerät nach Anspruch 9, gekennzeichnet durch eine Einrichtung (60) zum Aufprägen einer weiteren optischen Phasenmodulation einer zweiten Modulationsfrequenz auf den ersten und den zweiten Strahl, wobei das Analysegerät (100) das Interferenzsignal in Abhängigkeit dieser weiteren optischen Phasenmodulation untersucht.

11. Interferenzmeßgerät zur Bestimmung einer physikalischen Größe mit:

einer optischen Strahlungsquelle (10),
einer Einrichtung (40) zur Erzeugung eines ersten und zweiten Strahles aus dieser optischen Strahlung, wobei die Phasenbeziehung zwischen erstem und zweitem Strahl von der physikalischen Größe abhängig ist,
einem optischen Phasenmodulator (50) zur Modulation des ersten und zweiten Strahles mit einer optischen Phasenmodulationsfrequenz $f_{m1}$,
einer Einrichtung (22), mittels derer der erste und zweite Strahl zur Interferenz gebracht werden, um einen Interferenzstrahl zu erzeugen,
einer Einrichtung (70) zur Erzeugung eines elektronischen Interferenzsignals aus dem Interferenzstrahl und einem Analysegerät (100) zur Untersuchung des elektronischen Interferenzsignals, um hieraus die optische Phasendifferenz zwischen dem ersten und dem zweiten Strahl zu ermitteln und somit die physikalische Meßgröße zu bestimmen,

dadurch gekennzeichnet, daß

das Interferenzmeßgerät eine Einrichtung (60) zur Aufprägung einer weiteren optischen Phasenmodulation einer zweiten Modulationsfrequenz $f_{m2}$ auf den ersten und den zweiten Strahl enthält, wobei
das Analysegerät (100) das Interferenzsignal in Abhängigkeit von der weiteren optischen Phasenmodulation untersucht, und daß eine Einrichtung zur Ableitung eines Parameters zumindest einer Komponente der Überlagerungsfrequenz aus der ersten und der zweiten Modulationsfrequenz vorgesehen ist, um die optische Phasendifferenz zu ermitteln.

12. Interferenzmeßgerät nach Anspruch 9 oder 11, dadurch gekennzeichnet, daß zumindest eine Komponente der Schwebungsfrequenz sich auf die folgende Differenz zurückführen läßt:
a) die Differenz zwischen dem Produkt der ersten Modulationsfrequenz mit einer ersten ganzen Zahl und dem Produkt der zweiten Modulationsfrequenz mit einer zweiten ganzen Zahl.

**13.** Interferenzmeßgerät nach einem der vorhergehenden Ansprüche, dadurch gekennzeichnet, daß der Parameter eine Amplitude der entfernten Frequenzkomponenten darstellt.

**14.** Interferenzmeßgerät nach einem der vorhergehenden Ansprüche, dadurch gekennzeichnet, daß der Parameter eine Phase der entfernten Komponenten der Faltungsfrequenz darstellt.

**15.** System zur Fahrzeugsteuerung mit

a) einem Interferenzmeßgerät gemäß einem der vorhergehenden Ansprüche,
b) einer Einrichtung zur Erzeugung eines Fahrzeug-Steuersignals aus der Messung der physikalischen Größe und
c) einer Einrichtung zur Fahrzeugsteuerung, die auf dieses Fahrzeug-Steuersignal anspricht.

**16.** Verfahren zur Messung einer physikalischen Größe gemäß den folgenden Schritten:

a) Erzeugung eines ersten und eines zweiten Strahls, wobei deren Phasenbeziehung von der physikalischen Größe abhängt,
b) Modulation des ersten und zweiten Strahles mit einer optischen Phasenmodulationsfrequenz $f_m$,
c) der modulierte erste und zweite Strahl werden zur Interferenz gebracht, um einen Interferenzstrahl zu erzeugen,
d) Erzeugung eines elektronischen Interferenzsignals aus diesem Interferenzstrahl und
e) Untersuchung des elektronischen Interferenzsignals, um die optische Phasendifferenz zwischen erstem und zweitem Strahl abzuleiten und dadurch die physikalische Größe zu messen,

dadurch gekennzeichnet, daß
im Schritt (e) das elektronische Interferenzsignal mit einer Abtastfrequenz $f_s$ abgetastet wird, um eine Reihe von Abtastdaten zu erzeugen, und die Komponenten $\Delta f$ der Faltungsfrequenz aus der Reihe der Abtastdaten gemäß der Beziehung $\Delta f = f_m - n \cdot f_s$, n ganzzahlig, entfernt werden, und daß mittels einer Einrichtung die optische Phasendifferenz aus einem Parameter dieser entfernten Komponenten der Faltungsfrequenz ermittelt wird.

**17.** Verfahren zur Messung einer physikalischen Größe gemäß den folgenden Schritten:

a) Erzeugung eines ersten und eines zweiten Strahls, wobei deren Phasenbeziehung von der physikalischen Größe abhängt,
b) Modulation des ersten und zweiten Strahles mit einer optischen Phasenmodulationsfrequenz $f_m$,
c) der modulierte erste und zweite Strahl werden zur Interferenz gebracht, um einen Interferenzstrahl zu erzeugen,
d) Erzeugung eines elektronischen Interferenzsignals aus diesem Interferenzstrahl und
e) Untersuchung des elektronischen Interferenzsignals, um die optische Phasendifferenz zwischen erstem und zweitem Strahl abzuleiten und dadurch die physikalische Größe zu messen,

dadurch gekennzeichnet, daß im Schritt (e) das elektronische Interferenzsignal mittels einer periodischen elektronischen Modulation von zumindest einer Modulationsfrequenz moduliert wird, um ein moduliertes Signal zu erzeugen, und zumindest eine Komponente der Überlagerungsfrequenz aus der optischen Phasenmodulationsfrequenz und zumindest einer der Modulationsfrequenzen untersucht wird.

**18.** Verfahren zur Messung einer physikalischen Größe gemäß den folgenden Schritten:

a) Erzeugung eines ersten und eines zweiten Strahls, wobei deren Phasenbeziehung von der physikalischen Größe abhängt,
b) Modulation des ersten und zweiten Strahles mit einer optischen Phasenmodulationsfrequenz $f_{m1}$,
c) der modulierte erste und zweite Strahl werden zur Interferenz gebracht, um einen Interferenzstrahl zu erzeugen,
d) Erzeugung eines elektronischen Interferenzsignals aus diesem Interferenzstrahl und
e) Untersuchung des elektronischen Interferenzsignals, um die optische Phasendifferenz zwischen erstem und zweitem Strahl abzuleiten und dadurch die physikalische Größe zu messen,

dadurch gekennzeichnet, daß

in einem weiteren Schritt vorgesehen ist, eine weitere optische Phasenmodulation $f_{m2}$ einer zweiten Modulationsfrequenz dem ersten und zweiten Strahl aufzuprägen und zumindest eine Komponente der Überlagerungsfrequenz aus der ersten und der zweiten Modulationsfrequenz zu untersuchen.

**Revendications**

1. Capteur d'interférence pour mesurer une quantité physique, comprenant :

   une source (10) pour générer un rayonnement optique ;
   des moyens (40) pour générer des premier et deuxième faisceaux de rayonnement à partir dudit rayonnement optique, la relation de phase entre les premier et deuxième faisceaux de rayonnement dépendant de ladite quantité physique ;
   un modulateur de phase optique (50) pour moduler lesdits premier et deuxième faisceaux de rayonnement avec une fréquence de modulation de phase optique $f_m$ ;
   des moyens (22) pour faire interférer lesdits premier et deuxième faisceaux de rayonnement, et pour générer par conséquent un faisceau d'interférence;
   des moyens (70) pour générer un signal d'interférence électronique à partir dudit faisceau d'interférence; et
   un analyseur (100) pour analyser ledit signal d'interférence électronique de façon à dériver la différence de phase optique entre les premier et deuxième faisceaux de rayonnement, de façon à mesurer par conséquent ladite quantité physique;

   caractérisé en ce que :
   ledit analyseur (100) comporte des moyens (120) pour échantillonner le signal d'interférence électronique à une fréquence d'échantillonnage $f_s$, de façon à obtenir une série de données échantillonnées, et des moyens (17) pour extraire des composantes de fréquence de repliement $\Delta f$ de la série de données échantillonnées selon une relation $\Delta f=f_m - nf_s$, n étant un nombre entier, et des moyens pour dériver la différence de phase optique à partir d'un paramètre des composantes de fréquence de repliement extraites.

2. Capteur d'interférence selon la revendication 1, dans lequel la fréquence d'échantillonnage prédéterminée $f_s$ est inférieure à la fréquence $f_m$.

3. Capteur d'interférence selon la revendication 1 ou la revendication 2, dans lequel lesdits moyens (40) pour générer des premier et deuxième faisceaux de rayonnement sont une boucle de fibre optique configurée de telle sorte que lesdits premier et deuxième faisceaux de rayonnement se propagent dans des directions opposées autour de ladite boucle.

4. Capteur d'interférence selon l'une quelconque des revendications précédentes, comprenant des moyens (150) pour faire varier ladite fréquence d'échantillonnage prédéterminée $f_s$.

5. Capteur d'interférence selon l'une quelconque des revendications précédentes, dans lequel ledit analyseur (100) comporte également des moyens (201) pour moduler électroniquement ledit signal d'interférence électronique par une modulation électronique périodique de fréquence prédéterminée afin d'obtenir la série de données échantillonnées.

6. Capteur d'interférence selon l'une quelconque des revendications précédentes, comprenant de plus des moyens (60) pour imposer une modulation de phase optique supplémentaire sur lesdits premier et deuxième faisceaux de rayonnement à une deuxième fréquence de modulation, et ledit analyseur (100) est configuré de façon à analyser ledit signal d'interférence en fonction de ladite modulation de phase optique supplémentaire.

7. Capteur d'interférence selon l'une quelconque des revendications précédentes, dans lequel les moyens pour échantillonner effectuent un échantillonnage à la fréquence d'échantillonnage qui est inférieure à la première fréquence de modulation, et les moyens pour extraire les composantes de fréquence de repliement extraient les composantes de fréquence de repliement de telle sorte que les harmoniques de celles-ci aient toujours une fréquence inférieure à la première fréquence de modulation.

8. Capteur d'interférence selon l'une quelconque des revendications précédentes, dans lequel les moyens pour dériver la différence de phase optique comprennent des moyens pour démoduler les composantes de fréquence de

repliement extraites avec un signal de fréquence obtenu en échantillonnant la première fréquence de modulation à la fréquence d'échantillonnage.

**9.** Capteur d'interférence pour mesurer une quantité physique, comprenant:

une source (10) pour générer un rayonnement optique;
des moyens (40) pour générer des premier et deuxième faisceaux de rayonnement à partir dudit rayonnement optique, la relation de phase entre les premier et deuxième faisceaux de rayonnement dépendant de ladite quantité physique ;
un modulateur de phase optique (50) pour moduler lesdits premier et deuxième faisceaux de rayonnement avec une fréquence de modulation de phase optique $f_m$ ;
des moyens (22) pour faire interférer lesdits premier et deuxième faisceaux de rayonnement, et pour générer par conséquent un faisceau d'interférence;
des moyens (70) pour générer un signal d'interférence électronique à partir dudit faisceau d'interférence; et
un analyseur pour analyser ledit signal d'interférence électronique de façon à dériver la différence de phase optique entre les premier et deuxième faisceaux de rayonnement, de façon à mesurer par conséquent ladite quantité physique;

caractérisé en ce que :
ledit analyseur comporte des moyens (201) pour moduler électroniquement ledit signal d'interférence électronique par une modulation électronique périodique ayant au moins une fréquence de modulation afin d'obtenir un signal modulé; et des moyens (170) pour dériver un paramètre ayant au moins une composante de fréquence de battement entre la fréquence $f_m$ et ladite fréquence de modulation au nombre d'au moins une, de façon à dériver par conséquent ladite différence de phase optique.

**10.** Capteur d'interférence selon la revendication 9, comprenant de plus des moyens (60) pour imposer une modulation de phase optique supplémentaire auxdits premier et deuxième faisceaux de rayonnement à une deuxième fréquence de modulation, et ledit analyseur (100) étant configuré de façon à analyser ledit signal d'interférence en fonction de ladite modulation de phase optique supplémentaire.

**11.** Capteur d'interférence pour mesurer une quantité physique, comprenant :

une source (10) pour générer un rayonnement optique ;
des moyens (40) pour générer des premier et deuxième faisceaux de rayonnement à partir dudit rayonnement optique, la relation de phase entre les premier et deuxième faisceaux de rayonnement dépendant de ladite quantité physique ;
un modulateur de phase optique (50) pour moduler lesdits premier et deuxième faisceaux de rayonnement avec une modulation de phase optique ayant une première fréquence de modulation $f_{m1}$ ;
des moyens (22) pour faire interférer lesdits premier et deuxième faisceaux de rayonnement, et pour générer par conséquent un faisceau d'interférence;
des moyens (70) pour générer un signal d'interférence électronique à partir dudit faisceau d'interférence; et
un analyseur (100) pour analyser ledit signal d'interférence électronique de façon à dériver la différence de phase optique entre les premier et deuxième faisceaux de rayonnement, de façon à mesurer par conséquent ladite quantité physique;

caractérisé en ce que :

le capteur d'interférence (100) comprend de plus des moyens (60) pour imposer une modulation de phase optique supplémentaire auxdits premier et deuxième faisceaux de rayonnement à une deuxième fréquence de modulation $f_{m2}$ ; et
ledit analyseur (100) est configuré de façon à analyser ledit signal d'interférence en fonction de ladite modulation de phase optique supplémentaire, et par des moyens pour dériver un paramètre de la composante de fréquence de battement au nombre d'au moins une entre lesdites première et deuxième fréquences de modulation, de façon à dériver par conséquent lesdites différences de phase optique.

**12.** Capteur d'interférence selon la revendication 9 ou la revendication 11, dans lequel ladite composante de fréquence de battement au nombre d'au moins une est basée sur la différence entre :
a) la différence entre le produit de ladite première fréquence de modulation et d'un premier entier et le produit de

ladite deuxième fréquence de modulation et d'un deuxième entier.

**13.** Capteur d'interférence selon l'une quelconque des revendications précédentes, dans lequel ledit paramètre est une amplitude des composantes de fréquence extraites.

**14.** Capteur d'interférence selon l'une quelconque des revendications précédentes, dans lequel ledit paramètre est une phase des composantes de fréquence de repliement extraites.

**15.** Système de commande de véhicule comportant :

a) un capteur d'interférence selon l'une quelconque des revendications précédentes;
b) des moyens pour générer un signal de commande de véhicule à partir de la mesure de ladite quantité physique; et
c) des moyens réagissant audit signal de commande de véhicule en commandant ledit véhicule.

**16.** Procédé de mesure d'une quantité physique, comportant les étapes suivantes :

a) la génération d'un premier et d'un deuxième faisceaux de rayonnement de telle sorte que la relation de phase entre les premier et deuxième faisceaux dépende de ladite quantité physique ;
b) la modulation desdits premier et deuxième faisceaux de rayonnement avec une fréquence de modulation de phase optique $f_m$ ;
c) le fait de faire interférer lesdits premier et deuxième faisceaux modulés de façon à générer des faisceaux d'interférence;
d) la génération d'un signal d'interférence électronique à partir desdits faisceaux d'interférence ; et
e) l'analyse dudit signal d'interférence électronique afin de dériver la différence de phase optique entre les premier et deuxième faisceaux de rayonnement, de façon à mesurer par conséquent ladite quantité physique ;

caractérisé en ce que :

ladite étape (e) comprend l'échantillonnage du signal d'interférence électronique à une fréquence d'échantillonnage $f_s$ de façon à obtenir une série de données échantillonnées et l'extraction des composantes de fréquence de repliement $\Delta f$ de la série de données échantillonnées selon une relation $\Delta f = f_m - nf_s$, n étant un nombre entier, et par des moyens pour dériver la différence de phase optique par rapport à un paramètre des composantes de fréquence de repliement extraites.

**17.** Procédé de mesure d'une quantité physique, comprenant les étapes suivantes :

a) la génération de premier et deuxième faisceaux de rayonnement optique, de telle sorte que la relation de phase entre les premier et deuxième faisceaux dépende de ladite quantité physique ;
b) la modulation desdits premier et deuxième faisceaux de rayonnement optique avec une fréquence de modulation de phase optique $f_m$ ;
c) le fait de faire interférer lesdits premier et deuxième faisceaux modulés afin de générer par conséquent un faisceau d'interférence;
d) la génération d'un signal d'interférence électronique à partir dudit faisceau d'interférence ; et
e) l'analyse dudit signal d'interférence électronique de façon à dériver la différence de phase optique entre les premier et deuxième faisceaux de rayonnement, de façon à mesurer par conséquent ladite quantité physique ;

caractérisé en ce que :

ladite étape (e) comprend la modulation dudit signal d'interférence électronique par une modulation électronique périodique ayant au moins une fréquence de modulation de façon à obtenir un signal modulé, et la recherche d'au moins une composante de fréquence de battement entre la fréquence de modulation de phase optique et ladite fréquence de modulation au nombre d'au moins une.

**18.** Procédé de mesure d'une quantité physique, comprenant les étapes suivantes :

a) la génération de premier et deuxième faisceaux de rayonnement optique, de telle sorte que la relation de phase entre les premier et deuxième faisceaux dépende de ladite quantité physique ;
b) la modulation desdits premier et deuxième faisceaux de rayonnement optique avec une fréquence de mo-

dulation de phase optique $f_{m1}$ ;

c) le fait de faire interférer lesdits premier et deuxième faisceaux modulés de façon à générer un faisceau d'interférence;

d) la génération d'un signal d'interférence électronique à partir dudit faisceau d'interférence; et

e) l'analyse dudit signal d'interférence électronique de façon à dériver la différence de phase optique entre les premier et deuxième faisceaux de rayonnement, de façon à mesurer par conséquent ladite quantité physique ;

caractérisé en ce que :

le procédé comprend de plus l'étape d'imposition d'une modulation de phase optique supplémentaire $f_{m2}$ sur lesdits premier et deuxième faisceaux de rayonnement à une deuxième fréquence de modulation, et de recherche d'au moins une composante de fréquence de battement entre lesdites première et deuxième fréquences de modulation.

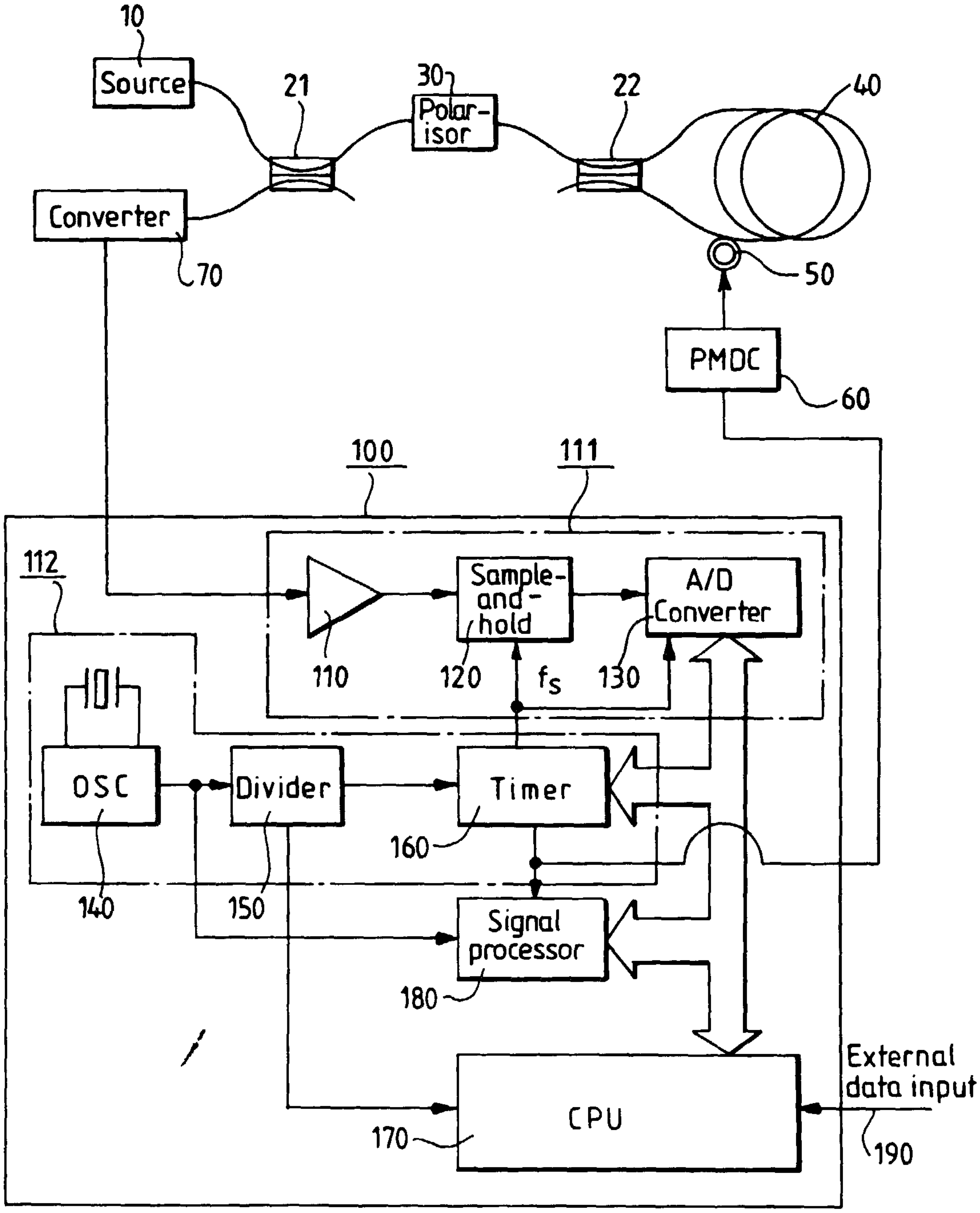
10
Source
21
30
Polar-
isor
22
40
Converter
70
50
PMDC
60
100
111
112
Sample-
and-
hold
A/D
Converter
110
120
$f_S$
130
OSC
Divider
Timer
160
140
150
Signal
processor
180
CPU
170
External
data input
190

Fig.1.

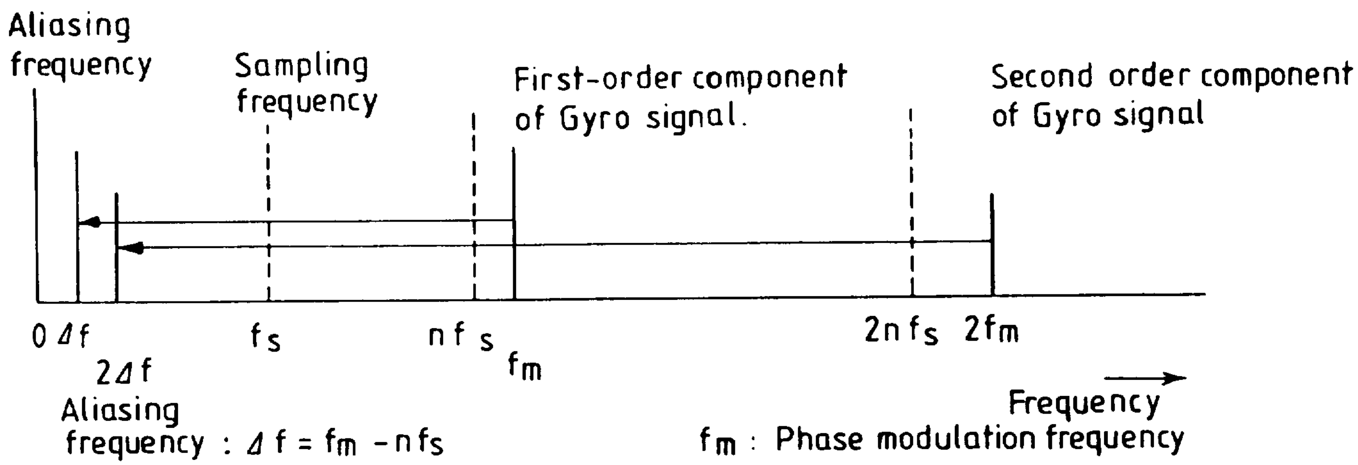
Aliasing frequency
Sampling frequency
First-order component of Gyro signal.
Second order component of Gyro signal
0 Δf
2Δf
fs
n f s
fm
2n fs
2fm
Frequency
Aliasing frequency : Δ f = fm - n fs
fm : Phase modulation frequency
fs : Sampling frequency
n : Integer

Fig.2(a)

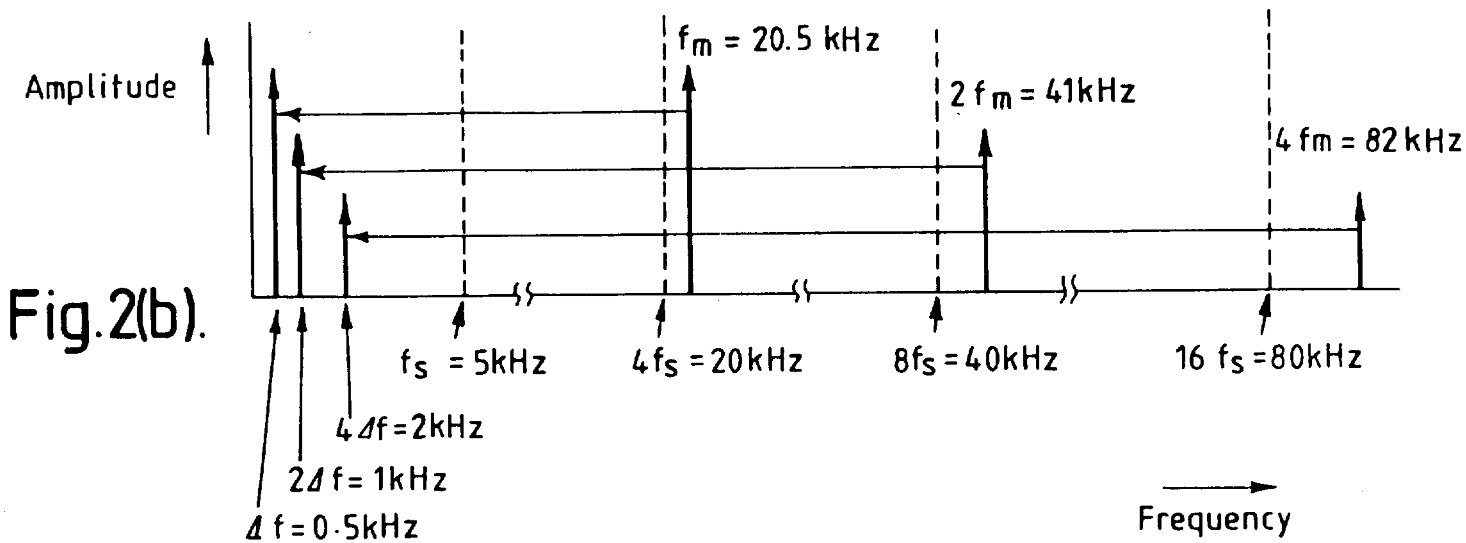
Amplitude
fm = 20.5 kHz
2 fm = 41kHz
4 fm = 82 kHz
fs = 5kHz
4fs = 20kHz
8fs = 40kHz
16 fs = 80kHz
4Δf = 2kHz
2Δ f = 1kHz
Δ f = 0·5kHz
Frequency

Fig.2(b).

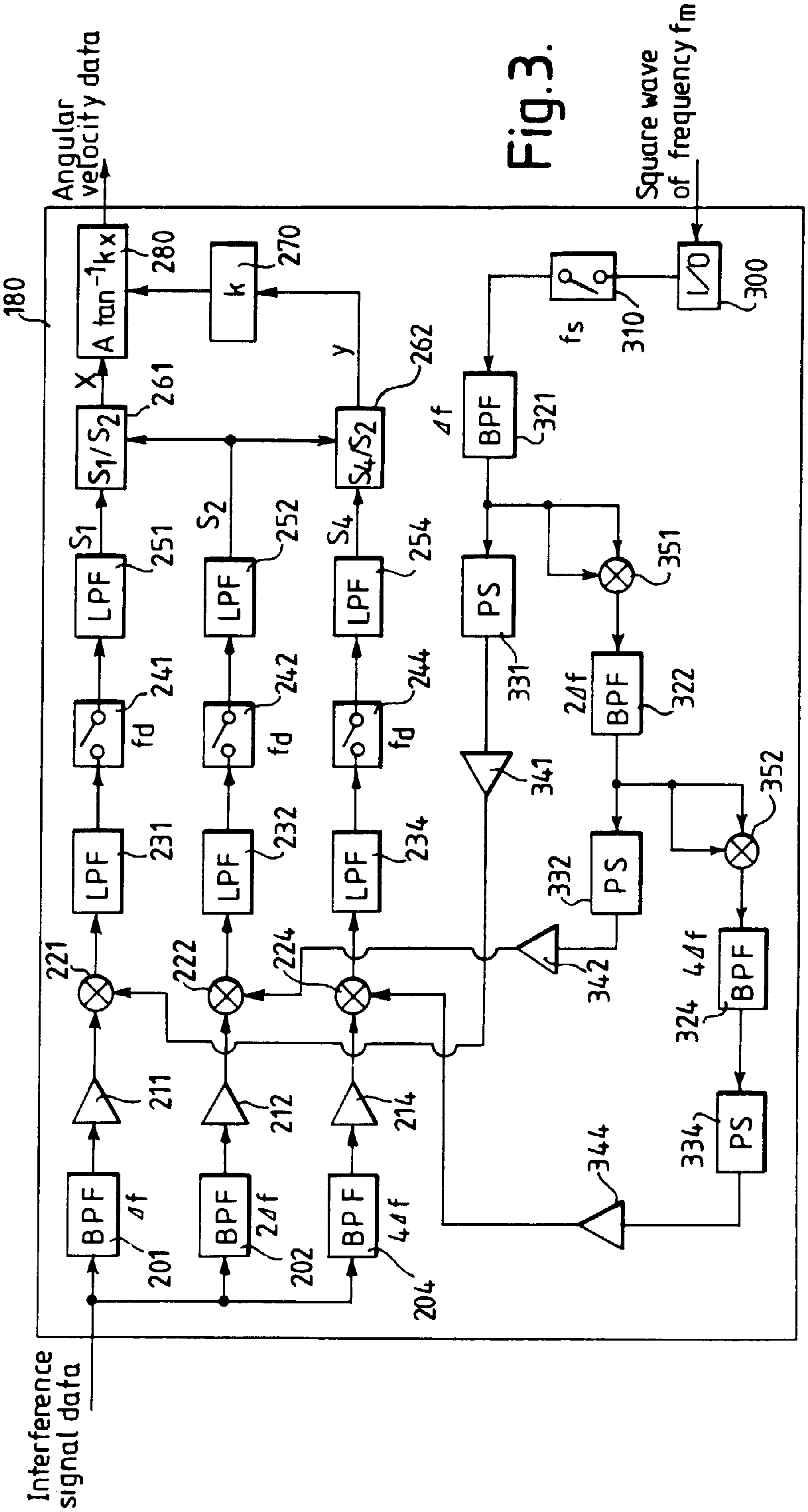
Angular velocity data
Interference signal data
Square wave of frequency fm
180
BPF
Δf
201
BPF
2Δf
202
BPF
4Δf
204
211
212
214
221
222
224
LPF
231
LPF
232
LPF
234
fd
241
fd
242
fd
244
LPF
251
LPF
252
LPF
254
S1
S2
S4
S1/S2
261
S4/S2
262
X
y
A tan⁻¹kx
280
k
270
300
fs
310
BPF
Δf
321
PS
331
341
351
BPF
2Δf
322
352
PS
332
342
BPF
4Δf
324
PS
334
344

Fig.3.

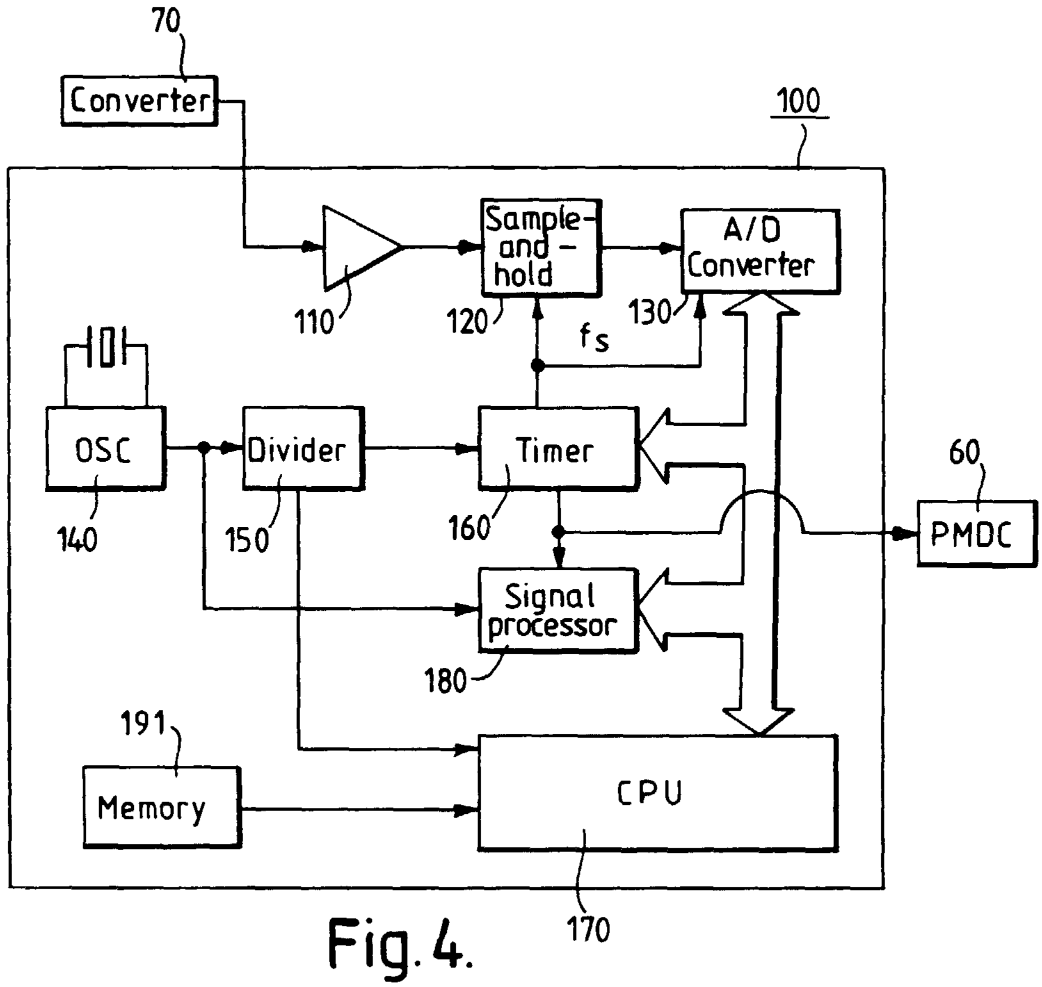
70
Converter
100
Sample-and-hold
A/D Converter
110
120
fs
130
OSC
Divider
Timer
60
PMDC
140
150
160
Signal processor
180
191
Memory
CPU
170

Fig. 4.

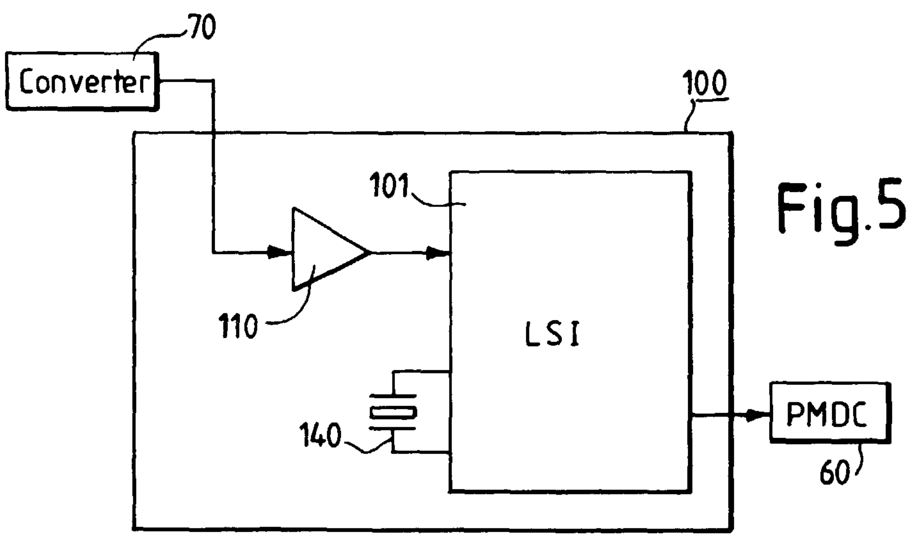
70
Converter
100
101
LSI
110
140
PMDC
60

Fig.5.

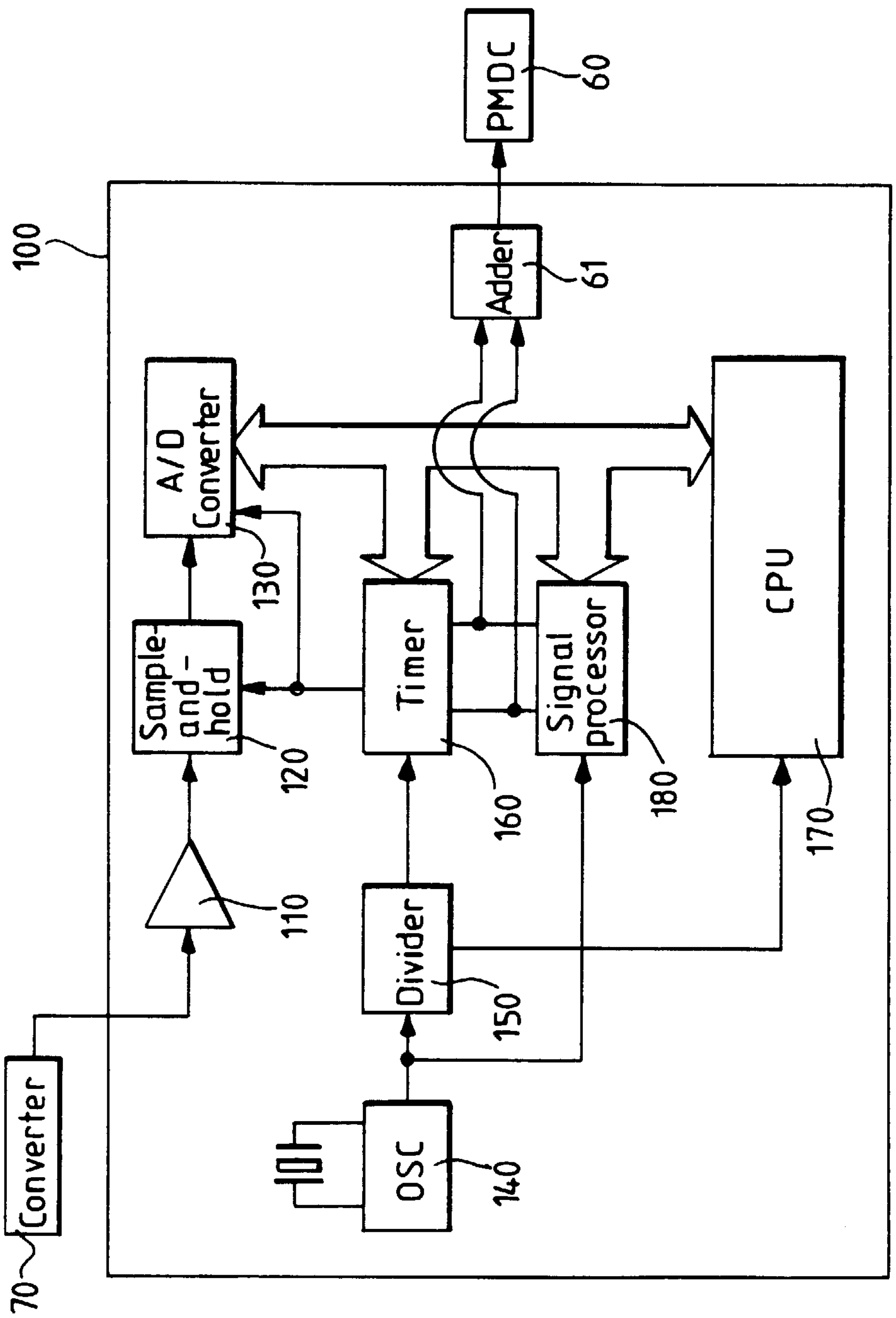
PMDC
60
100
Adder
61
A/D Converter
130
Sample-and-hold
120
110
Timer
160
Signal processor
180
CPU
170
Divider
150
OSC
140
Converter
70

Fig.6.

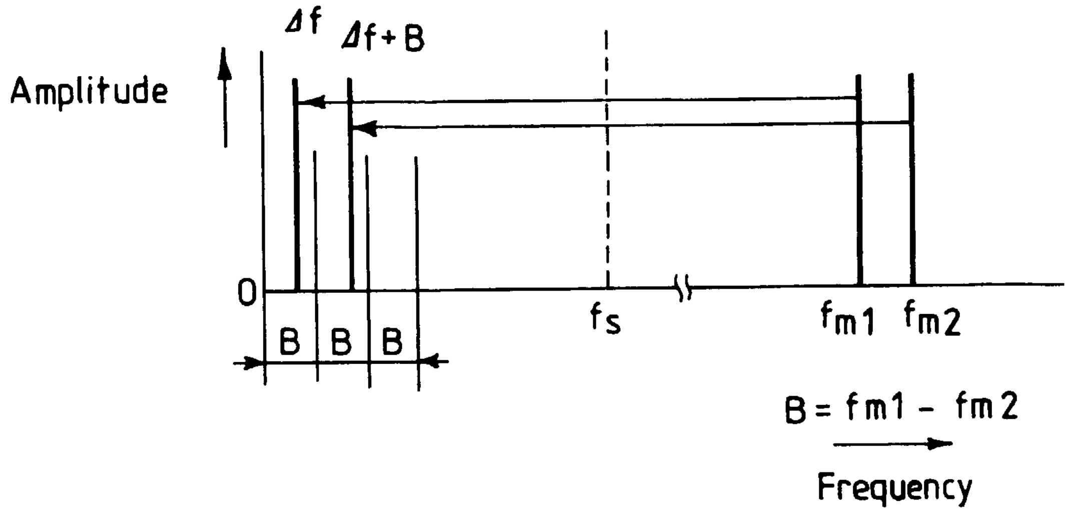

Δf
Δf+B
Amplitude
0
B
B
B
fs
fm1
fm2
B = fm1 - fm2
Frequency


Fig. 7.

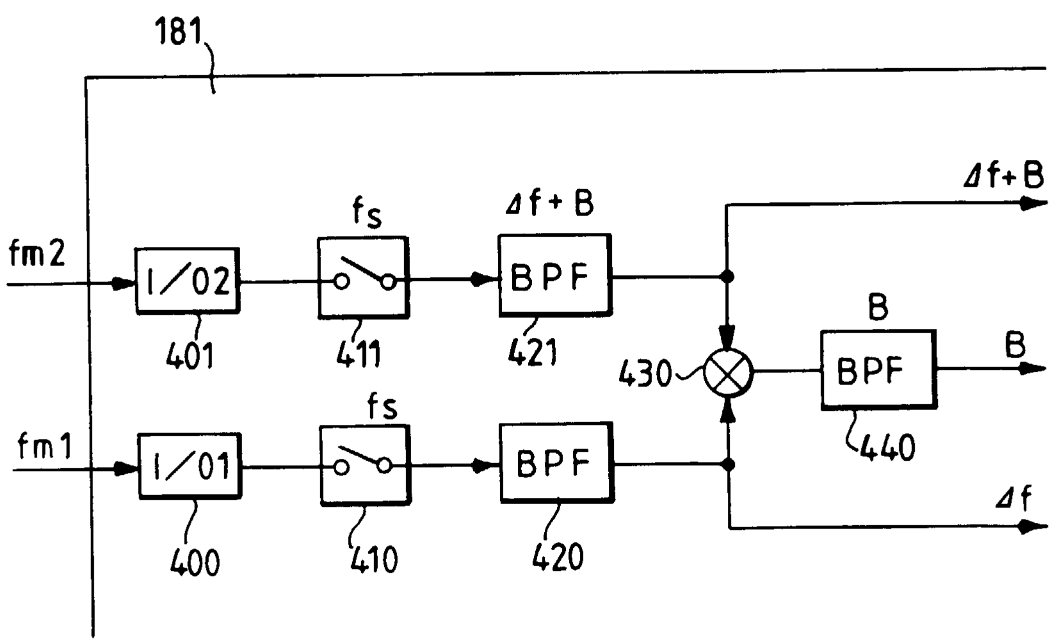

181
fm2
fm1
I/02
401
fs
411
Δf + B
BPF
421
430
B
BPF
440
Δf+B
B
I/01
400
fs
410
BPF
420
Δf


Fig.8.

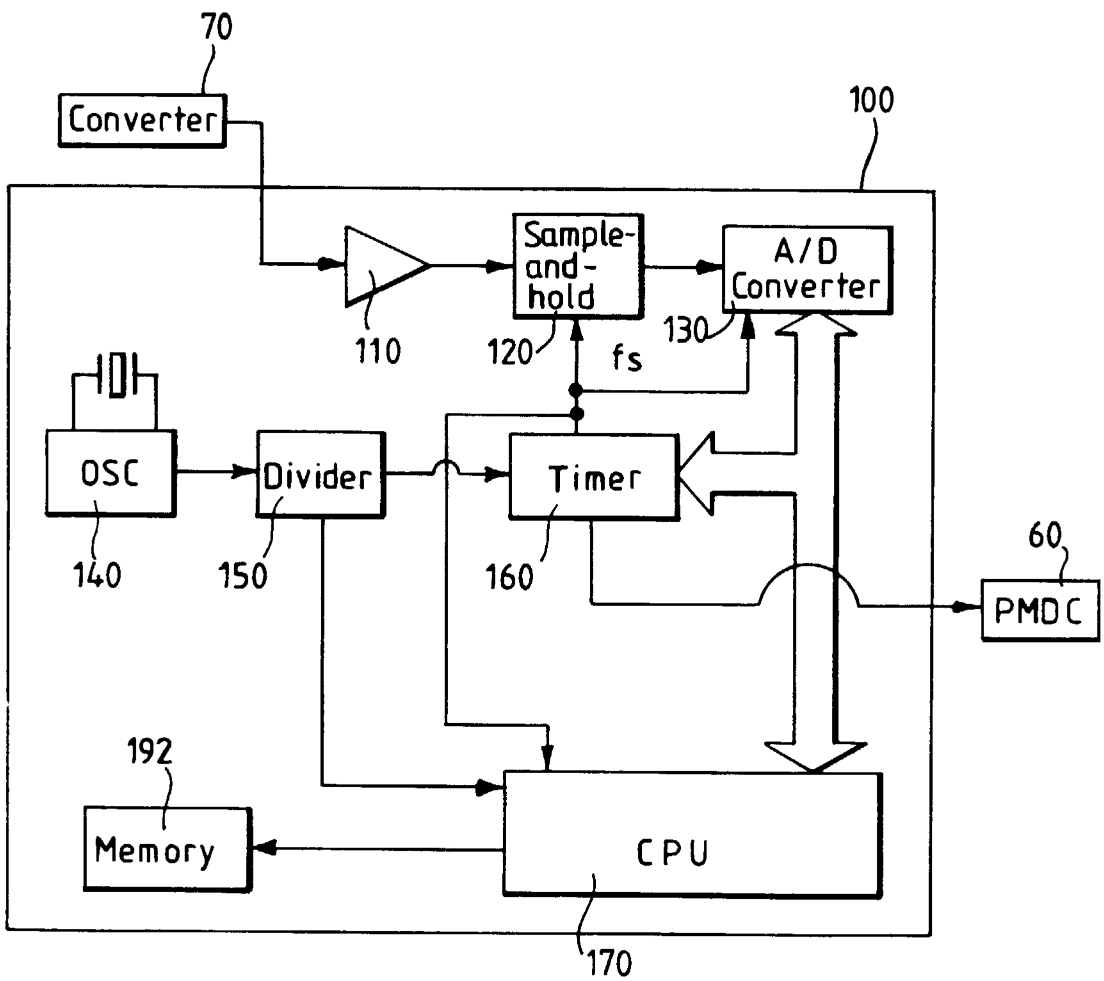
70
Converter
100
Sample-and-hold
A/D Converter
110
120
130
fs
OSC
Divider
Timer
140
150
160
60
PMDC
192
Memory
CPU
170

Fig.9.

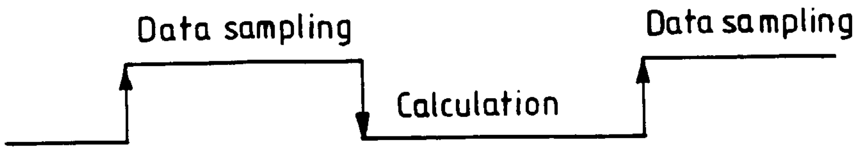


Fig.10.

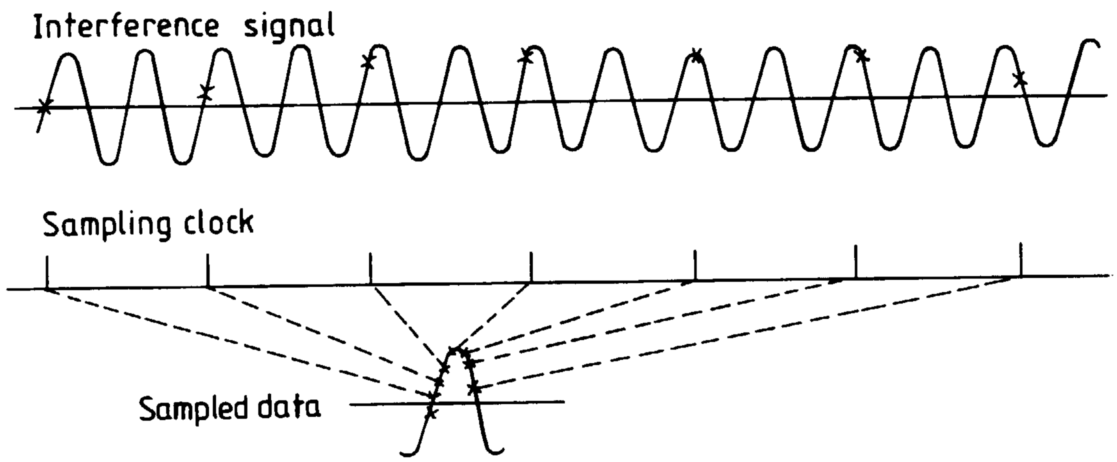


Fig.11.

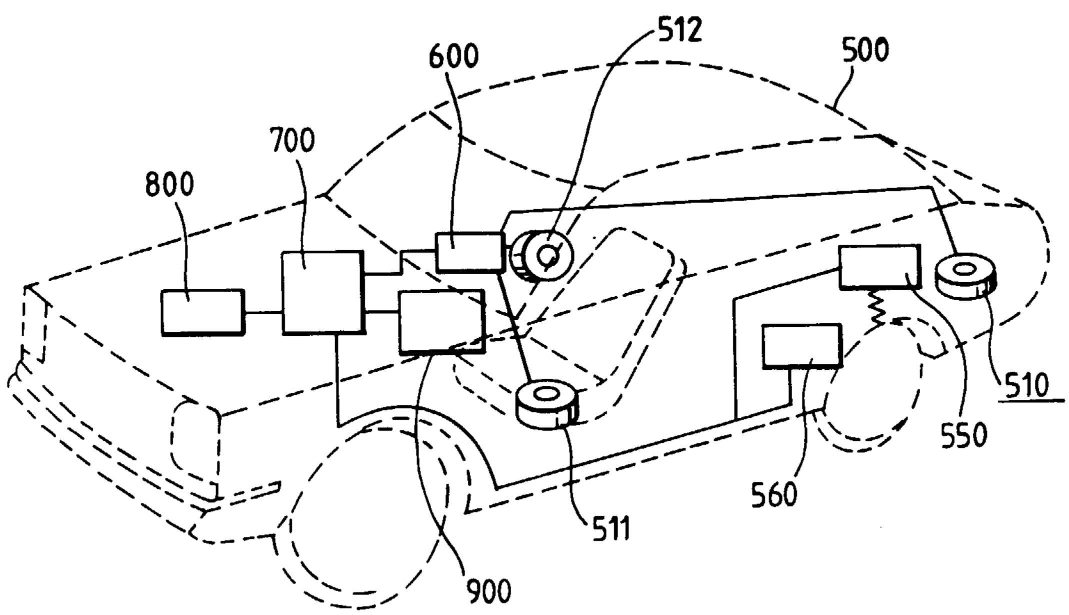


Fig.12.

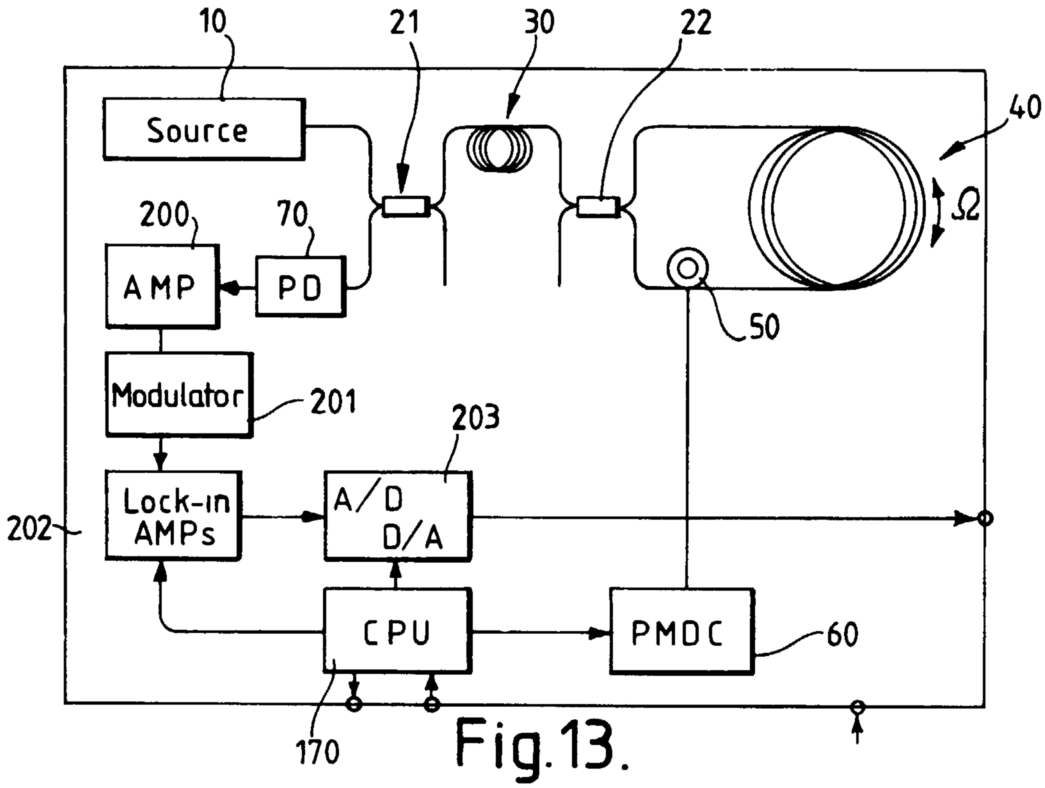
10
21
30
22
40
Source
Ω
200
70
AMP
PD
50
Modulator
201
203
Lock-in AMPs
A/D D/A
202
CPU
PMDC
60
170

Fig.13.

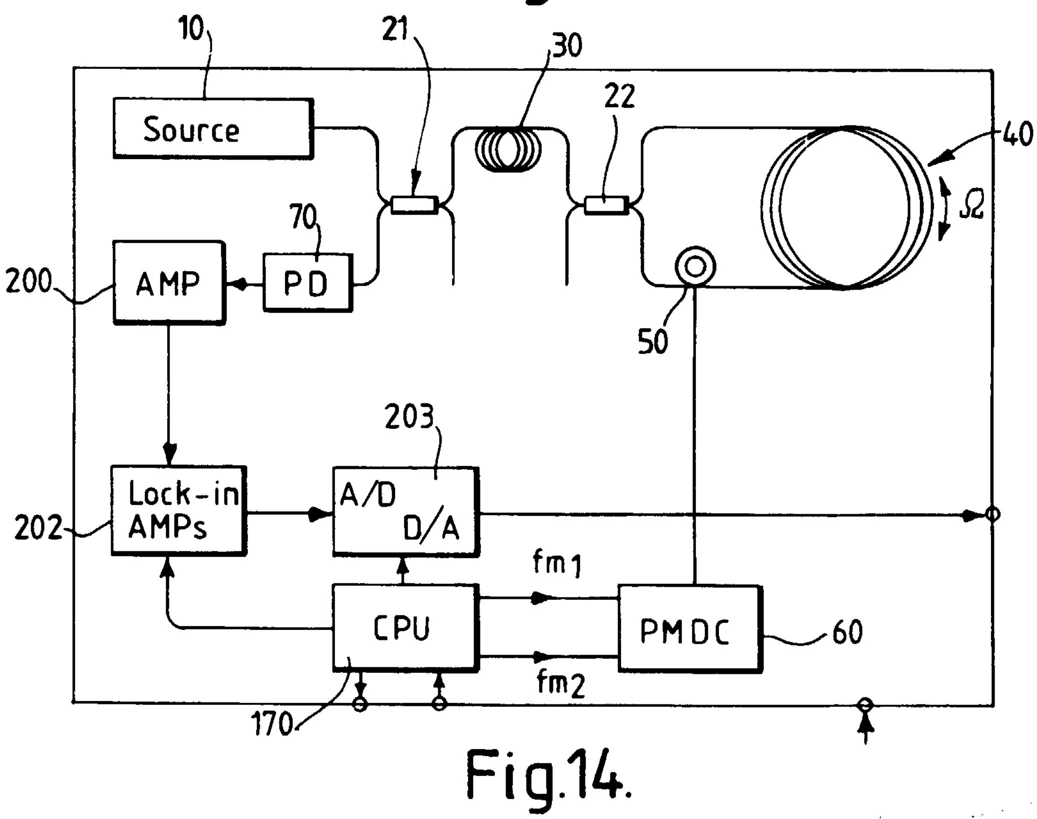
10
21
30
22
40
Source
Ω
70
200
AMP
PD
50
203
Lock-in AMPs
A/D D/A
202
fm1
CPU
PMDC
60
fm2
170

Fig.14.

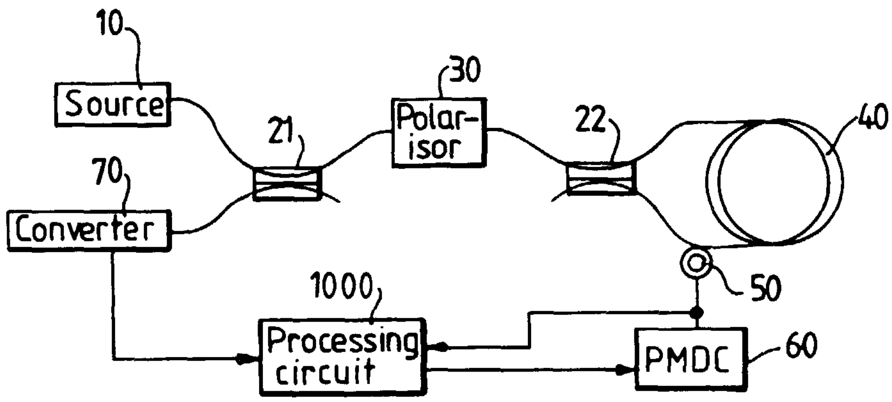
10
Source
70
Converter
21
30
Polar-
isor
22
40
50
1000
Processing
circuit
PMDC
60

Fig.15.

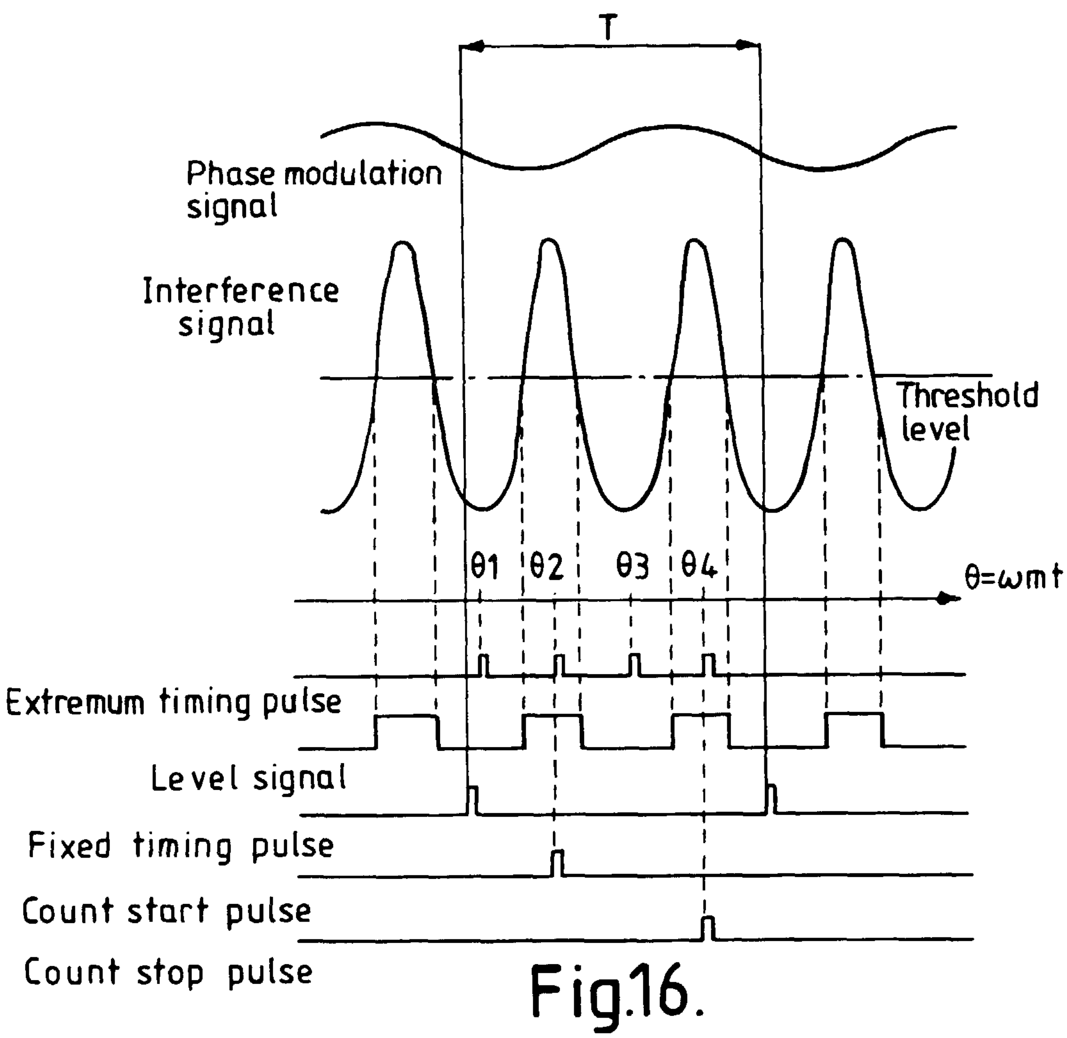
T
Phase modulation
signal
Interference
signal
Threshold
level
θ1
θ2
θ3
θ4
θ=ωmt
Extremum timing pulse
Level signal
Fixed timing pulse
Count start pulse
Count stop pulse

Fig.16.

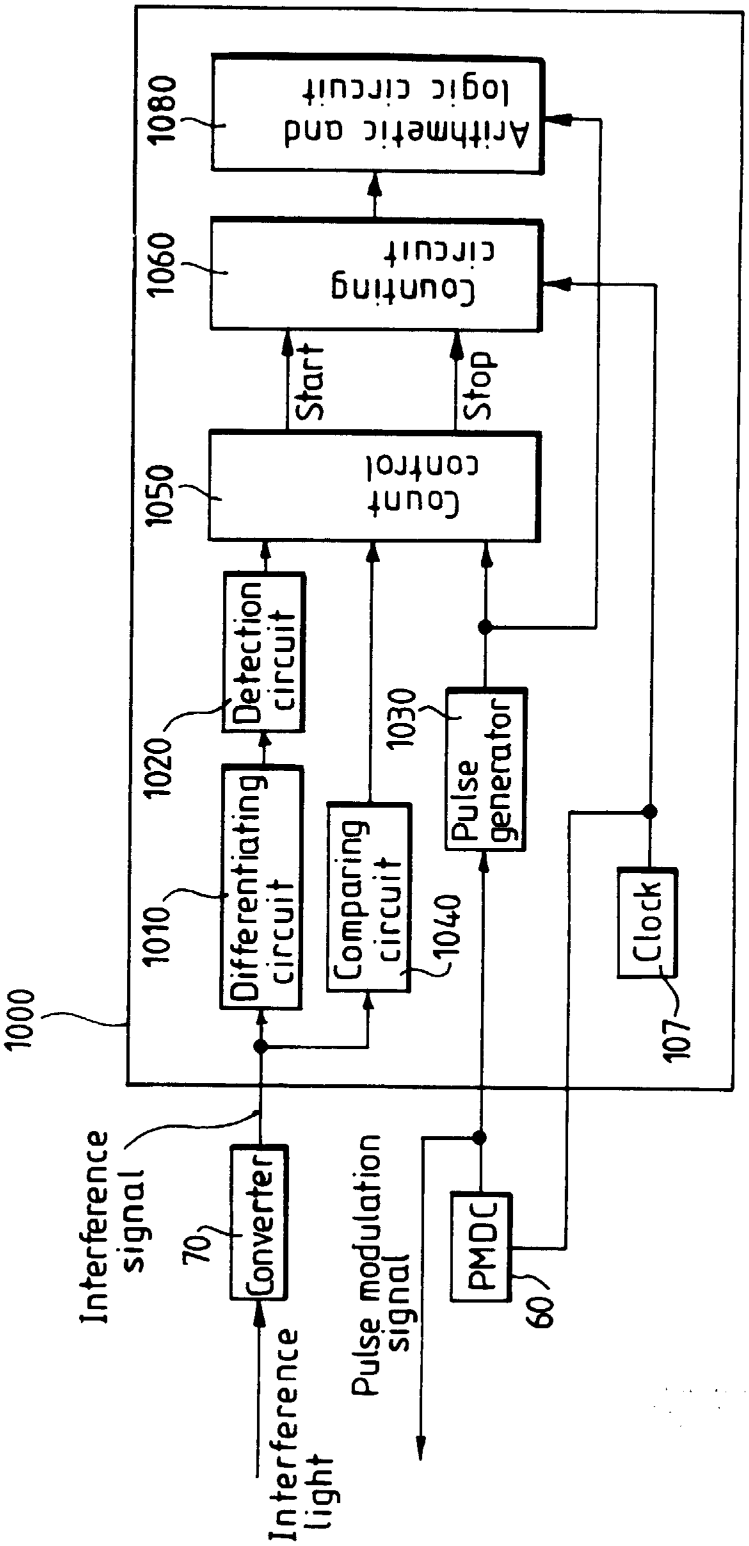
Interference light
Converter
70
Interference signal
PMDC
60
Pulse modulation signal
1000
Differentiating circuit
1010
Detection circuit
1020
Comparing circuit
1040
Pulse generator
1030
Clock
107
Count control
1050
Start
Stop
Counting circuit
1060
Arithmetic and logic circuit
1080

Fig.17.

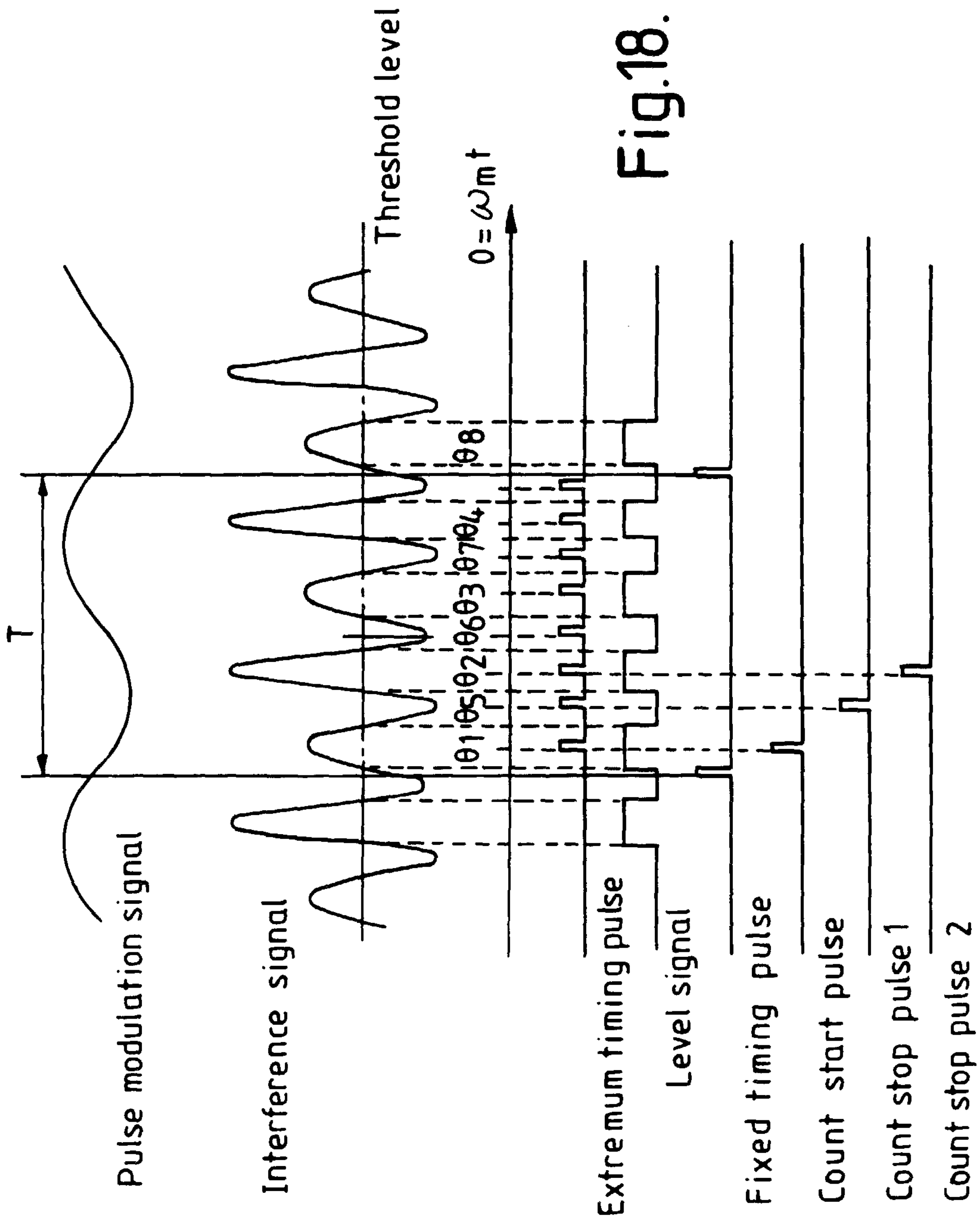
Pulse modulation signal
Interference signal
Threshold level
T
0=ωmt
Extremum timing pulse
Level signal
Fixed timing pulse
Count start pulse
Count stop pulse 1
Count stop pulse 2

Fig.18.

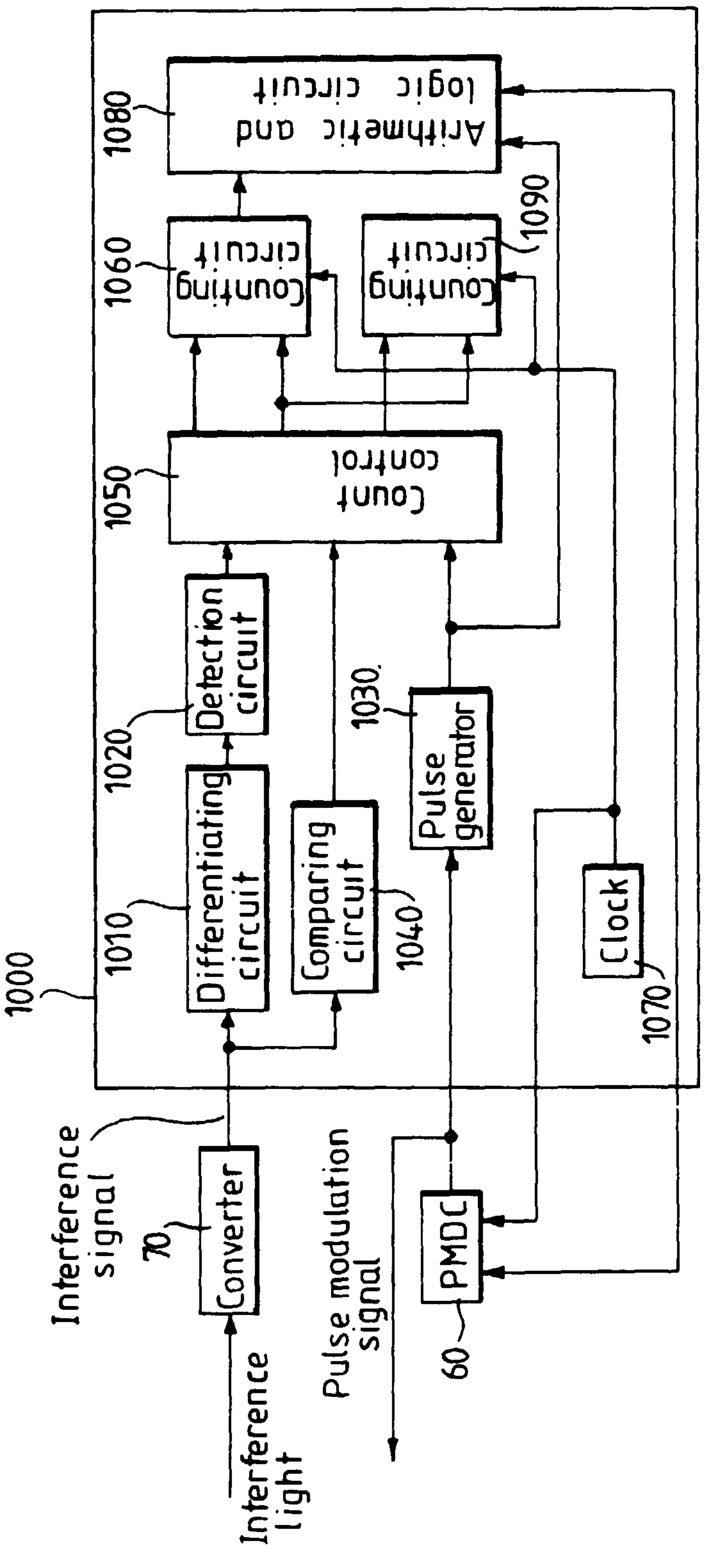
1000
1010
Differentiating circuit
1020
Detection circuit
Comparing circuit
1040
1030
Pulse generator
1050
Count control
1060
Counting circuit
Counting circuit
1090
1080
Arithmetic and logic circuit
Clock
1070
Interference signal
70
Converter
Interference light
Pulse modulation signal
PMDC
60

Fig.19.

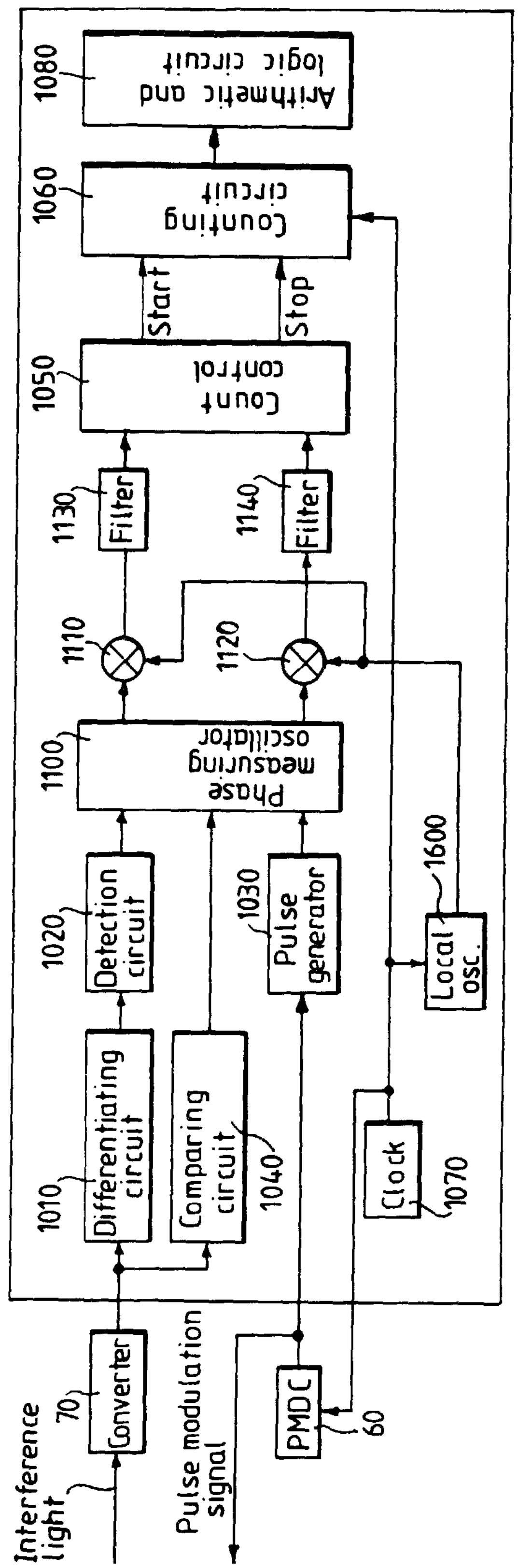
Interference light
70
Converter
Pulse modulation signal
PMDC
60
1010
Differentiating circuit
Comparing circuit
1040
Clock
1070
1020
Detection circuit
1030
Pulse generator
Local osc.
1600
1100
Phase measuring oscillator
1110
1120
1130
Filter
1140
Filter
1050
Count control
Start
Stop
1060
Counting circuit
1080
Arithmetic and logic circuit

Fig.20.

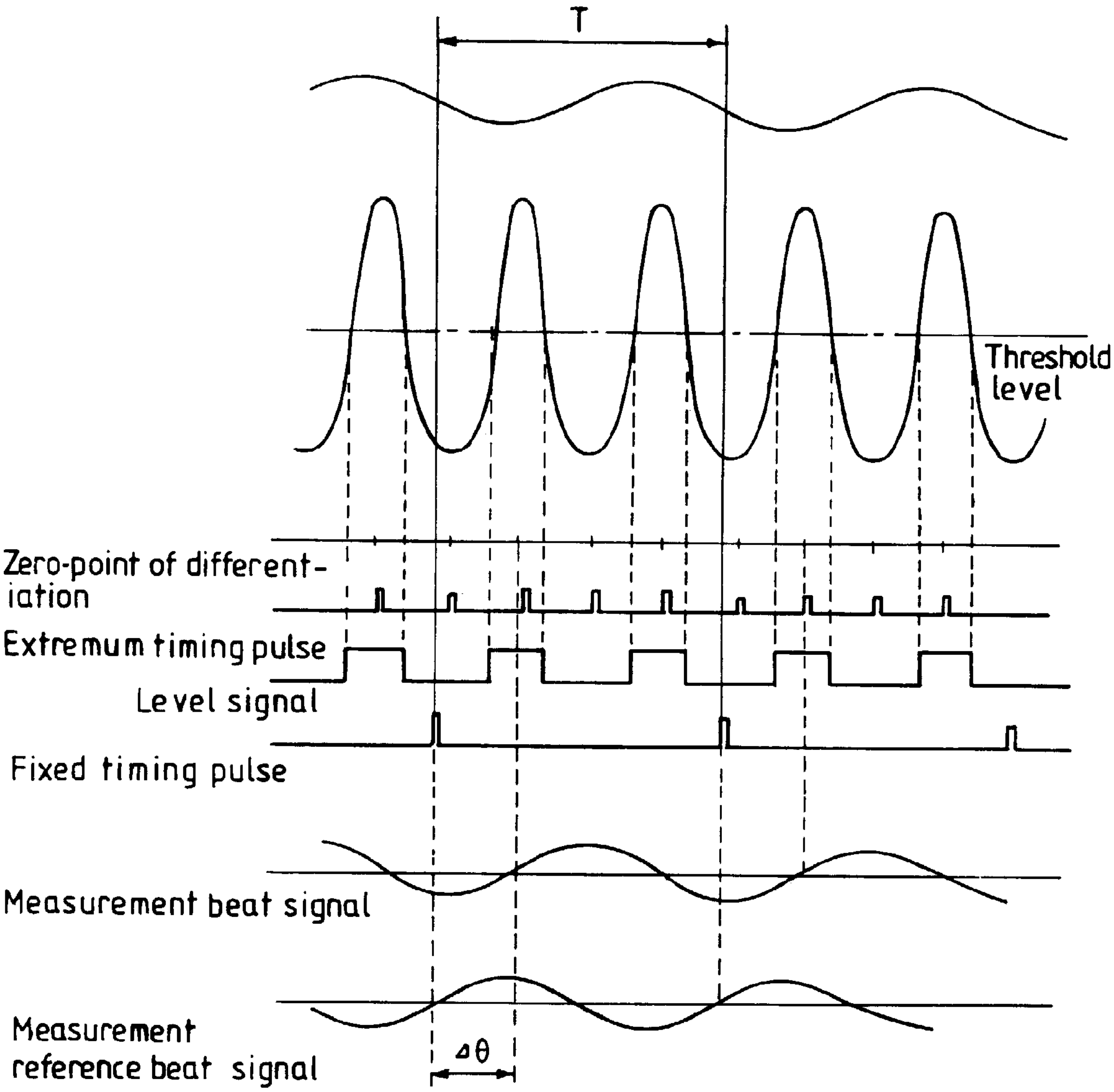
T
Threshold level
Zero-point of differentiation
Extremum timing pulse
Level signal
Fixed timing pulse
Measurement beat signal
Measurement reference beat signal
Δθ

Fig.21.

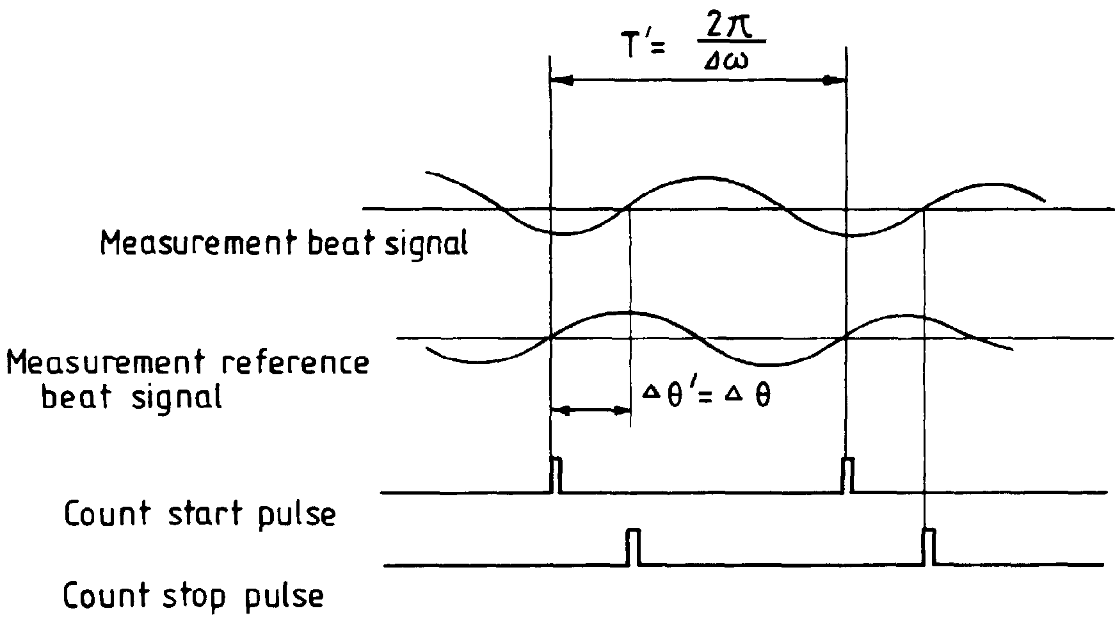
T' = 2π / Δω
Measurement beat signal
Measurement reference beat signal
Δθ' = Δθ
Count start pulse
Count stop pulse

Fig. 22.

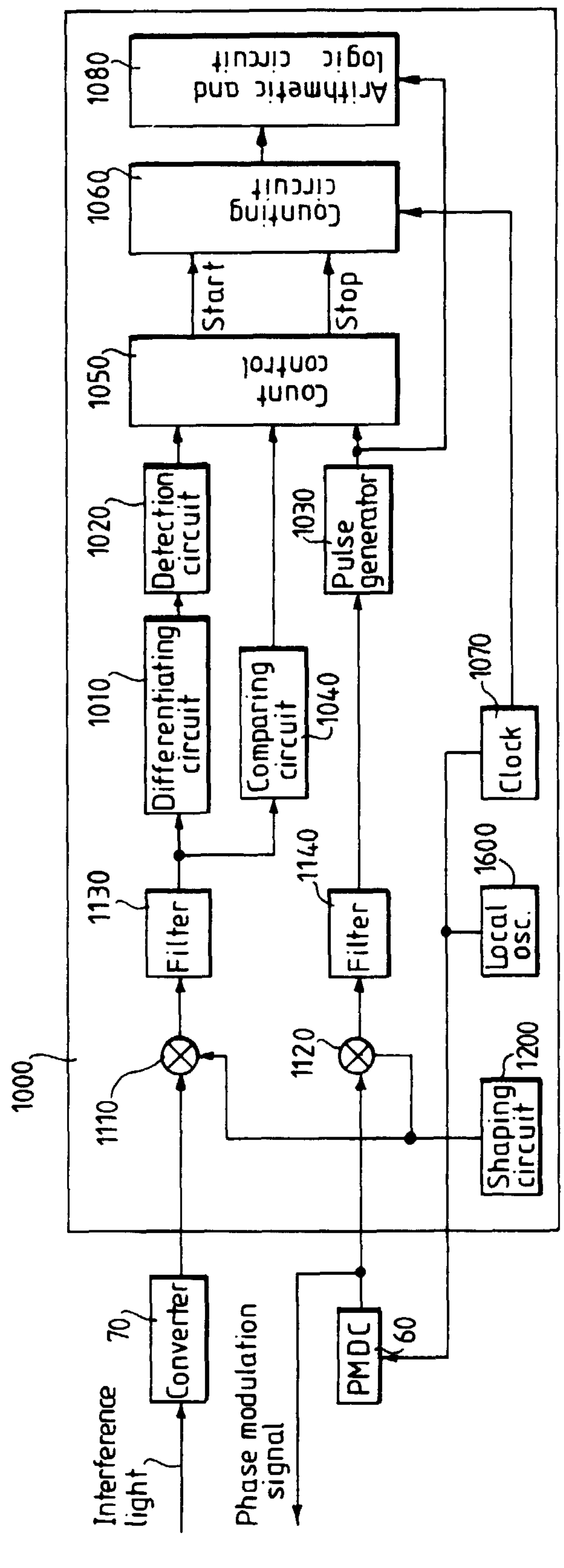
Interference light
Converter
70
Phase modulation signal
PMDC
60
1000
1110
1120
Shaping circuit
1200
Filter
1130
Filter
1140
Local osc.
1600
Differentiating circuit
1010
Comparing circuit
1040
Clock
1070
Detection circuit
1020
Pulse generator
1030
Count control
1050
Start
Stop
Counting circuit
1060
Arithmetic and logic circuit
1080

Fig.23.

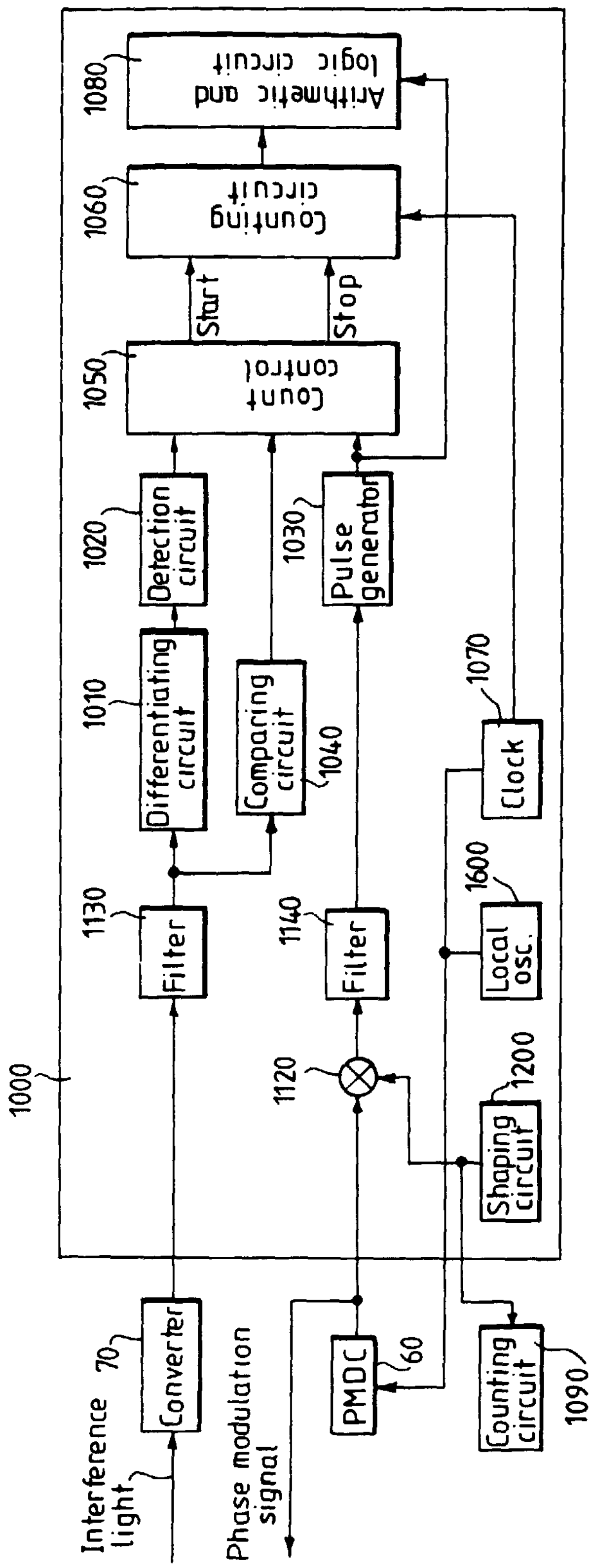
1000
1080
Arithmetic and logic circuit
1060
Counting circuit
Start
Stop
1050
Count control
1020
Detection circuit
1030
Pulse generator
1010
Differentiating circuit
Comparing circuit
1040
1070
Clock
1130
Filter
1140
Filter
1600
Local osc.
1120
1200
Shaping circuit
Interference light
70
Converter
Phase modulation signal
PMDC
60
Counting circuit
1090

Fig.24.